# EUROPÄISCHE PATENTSCHRIFT

(11) **EP 4 731 484 B1**
(45) Veröffentlichungstag und Bekanntmachung des Hinweises auf die Patenterteilung: **04.11.2026**
(21) Anmeldenummer: 25713189.6
(22) Anmeldetag: 28.02.2025
(51) Int. Cl.: B60T 11/21, B62D 11/08, F16D 57/00, F16F 9/53, G05G 5/00, G05G 7/16, F16D 63/00

(54) **VORRICHTUNG MIT WENIGSTENS EINER AKTOREINRICHTUNG ZUR GEZIELTEN BEEINFLUSSUNG DER BEWEGBARKEIT EINES ÜBERTRAGUNGSELEMENTS**
DEVICE WITH AT LEAST ONE ACTUATOR DEVICE FOR TARGETEDLY INFLUENCING THE MOBILITY OF A TRANSMISSION ELEMENT
DISPOSITIF AVEC AU MOINS UN DISPOSITIF D'ACTIONNEMENT POUR INFLUENCER DE MANIÈRE CIBLÉE LA MOBILITÉ D'UN ÉLÉMENT DE TRANSMISSION

(30) Priorität: 01.03.2024 DE 102024106024
(43) Veröffentlichungstag der Anmeldung: 29.04.2026
(73) Patentinhaber: INVENTUS Engineering GmbH, 6771 St. Anton i.M. (AT)
(72) Erfinder: BATTLOGG, Stefan, 6771 St. Anton i.M. (AT)
(74) Vertreter: BSB Patentanwälte Schütte & Engelen Partnerschaft mbB
(86) Internationale Anmeldenummer: PCT/EP2025/055494
(87) Internationale Veröffentlichungsnummer: WO 2025/181326

(56) Entgegenhaltungen:
- WO-A1-2024/041792
- DE-A1- 102021 006 135
- US-A1- 2007 181 391
- US-A1- 2023 406 401

## Beschreibung

Die Erfindung betrifft eine Vorrichtung, welche wenigstens ein bewegbares Übertragungselement und wenigstens eine Aktoreinrichtung zur gezielten Beeinflussung der Bewegbarkeit des Übertragungselements umfasst. Die Aktoreinrichtung umfasst wenigstens eine magnetorheologische Bremseinrichtung zur Erzeugung eines auf das Übertragungselement wirkenden Bremsmoments, sodass die Bewegbarkeit des Übertragungselements gezielt bremsbar ist. Die Aktoreinrichtung umfasst zudem wenigstens eine Antriebseinrichtung zur Erzeugung eines auf das Übertragungselement wirkenden Drehmoments, sodass das Übertragungselement aktiv bewegbar ist.

Eine solche Vorrichtung kann eine Bedieneinrichtung sein, welche z. B. als eine Lenkvorgabeeinrichtung nach dem Steer-by-Wire-Konzept (SbW, Steer-by-Wire) ausgebildet ist. Die Bedieneinrichtung kann dann mit einer als sog. "Force Feedback Actuator" (FFA, Kraftrückkopplungsaktuator) bezeichneten Aktoreinrichtung ausgestattet sein. Der FFA umfasst z. B. einen (Elektro-)Motor und eine stufenlos einstellbare Bremseinrichtung nach dem magnetorheologischen Prinzip. Bei Lenkungen nach dem Steer-by-Wire-Konzept wird der durch die Lenkvorgabe (durch manuelles Drehen der Lenkvorgabeeinrichtung) erfasste Lenkbefehl elektronisch an einen sog. Road Wheel Actuator (RWA, Fahrzeugradaktuator) weitergeleitet, der eine dem Lenkbefehl entsprechende Einstellung des Einschlagwinkels der Räder vornimmt.

Das SbW-Konzept verlangt in der Regel hohe passive Drehmomente (10-35 Nm), gegen die das Lenkrad manuell gedreht werden muss (z. B. für Endanschläge). Zugleich werden besonders niedrigere (aktive) Drehmomente (0,5 - 5 Nm) verlangt, die die Rückstellung des Lenkrades hervorrufen und haptische Signale bzw. Kraftrückkopplungen erzeugen. Beispielsweise simulieren solche Rückmeldungen die Bewegungen, welche bei konventionellen Lenkungen vom Fahrwerk ausgehen und am Lenkrad spürbar sind.

Im Stand der Technik weisen SbW-Systeme meist nur einen Elektromotor auf, der sowohl die aktiven als auch die passiven Drehmomente erzeugt, z. B. für einen Endanschlag. Ein Elektromotor benötigt für die Erzeugung von hohen passiven Momenten hohe Ströme und der Motor muss größer ausgelegt sein, als für die nötigen aktiven Drehmomente.

Diese Motoren erwärmen sich stark, was zu thermischen Problemen führt. Die hohen Ströme sind zudem für das Energiemanagement des Fahrzeugs nachteilig. Zusätzlich müssen Elektronikkomponenten gewählt werden, die für die hohen elektrischen Belastungen (Ströme) geeignet sind. Diese sind auch teuer in der Beschaffung. Zudem weisen die entsprechend großen Motoren in der Regel eine Getriebestufe auf (z. B. Schneckengetriebe, Riemengetriebe). Die zusätzlichen Bauteile erhöhen jedoch den Bauraumbedarf, das Gewicht und auch nicht unmaßgeblich die Kosten.

Aktoren mit magnetorheologischem Fluid (MRF-Aktoren bzw. MRF-Bremsen) benötigen für passive Drehmomente meist nur einen geringen Strom und kleineren Bauraum im Vergleich zu Elektromotoren. Sie können jedoch keine aktive Kraft aufbringen. Eine Kombination aus beiden bietet sich daher an. Allerdings fühlt sich die Lenkung mitunter etwas schwammig bzw. unpräzise an, weil MRF-Aktor und Motor ein gewisses Getriebespiel zueinander aufweisen.

Hohe Drehmomente bzw. Bremsmomente verlangen in der Regel entsprechend große Motoren bzw. Bremsen. Dadurch wird das Grundmoment (auch als Leerlaufmoment bezeichnet) unvorteilhaft erhöht. Ein hohes Grundmoment steht jedoch der Anforderung des leichtgängigen Lenkens und der guten Regelbarkeit stark entgegen. Fahrzeuge mit SbW-Systemen und optionalem autonomen Fahren sollen zudem einklappbare/einfahrbare Lenkräder aufweisen. Solche SbW-Systeme müssen zwangsläufig kompakt und leicht sein. Die bisher bekannten Lösungen sind daher stark verbesserungswürdig.

Auch für andere Arten von Bedieneinrichtungen, z. B. Joysticks, spielen die Präzision der haptischen Signale bzw. Kraftrückkopplungen und der Bedarf an Bauraum sowie der Energieverbrauch und das Gewicht in der Regel eine wichtige Rolle. Diese Aspekte sind zudem auch für andere Anwendungen der Vorrichtung, beispielsweise bei Exoskeletten bzw. Prothesen oder Türeinrichtungen, von entscheidender Bedeutung.

Eine gattungsgemäße Vorrichtung ist aus der US 2023/406401 A1 bekannt.

Demgegenüber ist es die Aufgabe der vorliegenden Erfindung, eine verbesserte Vorrichtung zur Verfügung zu stellen. Insbesondere soll die Vorrichtung die zuvor diskutierten Anforderungen möglichst weitgehend erfüllen und vorzugsweise zugleich eine zuverlässige und sichere Funktion bieten sowie wirtschaftlich herstellbar sein.

Diese Aufgabe wird gelöst durch eine Vorrichtung mit den Merkmalen des Anspruchs 1. Bevorzugte Weiterbildungen der Erfindung sind Gegenstand der Unteransprüche. Weitere Vorteile und Merkmale der vorliegenden Erfindung ergeben sich aus der allgemeinen Beschreibung und aus der Beschreibung der Ausführungsbeispiele.

Die erfindungsgemäße Vorrichtung umfasst wenigstens eine Aktoreinrichtung zur gezielten Beeinflussung einer Bewegbarkeit eines (bewegbaren) Übertragungselements. Die Vorrichtung umfasst insbesondere wenigstens ein bewegbares Übertragungselement. Die Vorrichtung umfasst wenigstens eine Aktoreinrichtung zur gezielten Beeinflussung der Bewegbarkeit des Übertragungselements. Die Aktoreinrichtung umfasst wenigstens eine magnetorheologische Bremseinrichtung (mit wenigstens zwei relativ zueinander drehbaren Bremskomponenten) zur Erzeugung eines Bremsmoments, welches auf das Übertragungselement wirkt. Mittels der Bremseinrichtung ist die Bewegbarkeit des Übertragungselements gezielt bremsbar. Die Aktoreinrichtung umfasst wenigstens eine Antriebseinrichtung (mit wenigstens zwei relativ zueinander drehbaren Antriebskomponenten) zur Erzeugung eines Drehmoments, welches auf das Übertragungselement wirkt. Mittels der Antriebseinrichtung ist das Übertragungselement aktiv bewegbar. Dabei sind die Bremseinrichtung und die Antriebseinrichtung axial benachbart zueinander innerhalb einer gemeinsamen Aufnahmestruktur untergebracht. Die Aufnahmestruktur ist mittels einer Lagereinrichtung drehbar auf einer Welleneinrichtung gelagert. Dabei umfasst die Lagereinrichtung wenigstens zwei und vorzugsweise nur zwei Lagerstellen. Dabei sind die Bremseinrichtung und die Antriebseinrichtung zwischen den wenigstens zwei Lagerstellen angeordnet. Insbesondere umfassen die Lagerstellen jeweils wenigstens ein Lager und vorzugsweise nur ein Lager oder sind als ein solches ausgebildet. Das Lager ist beispielsweise ein Wälzlager oder ein Gleitlager oder dergleichen. Insbesondere können die Aktoreinrichtung bzw. die Vorrichtung als Force-Feedback-Actuator (FFA) bezeichnet werden.

Die erfindungsgemäße Vorrichtung bietet viele Vorteile. Einen erheblichen Vorteil bietet die Anordnung von Bremseinrichtung und Antriebseinrichtung an der gemeinsamen Aufnahmestruktur. Einen erheblichen Vorteil bietet auch die Anordnung der Aktoreinrichtung zwischen den Lagerstellen. Das ermöglicht eine besonders kompakte und robuste und zugleich konstruktiv unaufwendige Vorrichtung. Mit einer solchen Vorrichtung können die zuvor diskutierten Anforderungen zuverlässig und unaufwendig sowie wirtschaftlich umsetzbar erfüllt werden. Besonders vorteilhaft werden die Anforderungen bei einem Einsatz als Bedieneinrichtung bzw. Lenkvorgabeeinrichtung erfüllt. Mit der Erfindung können besonders geringe Grundmomente erzielt werden. Zudem können auch hohe Kräfte, beispielsweise beim Abstützen am Lenkrad während des Aussteigens, zuverlässig aufgefangen und in die Karosserie weitergeleitet werden.

Vorzugsweise ist die Aufnahmestruktur drehfest mit einer von wenigstens zwei relativ zueinander drehbaren Antriebskomponenten der Antriebseinrichtung verbunden. Vorzugsweise ist die Aufnahmestruktur drehfest mit einer von wenigstens zwei relativ zueinander drehbaren Bremskomponenten der Bremseinrichtung verbunden. Vorzugsweise ist die Welleneinrichtung drehfest mit einer von wenigstens zwei relativ zueinander drehbaren Antriebskomponenten der Antriebseinrichtung verbunden. Vorzugsweise ist die Welleneinrichtung drehfest mit einer von wenigstens zwei relativ zueinander drehbaren Bremskomponenten der Bremseinrichtung verbunden. Mit anderen Worten, wenigstens eine Bremskomponente und wenigstens eine Antriebskomponente sind mit der Aufnahmestruktur drehfest verbunden und wenigstens einer andere Bremskomponente und wenigstens eine andere Antriebskomponente sind mit der Welleneinrichtung drehfest verbunden.

Insbesondere bilden die relativ zueinander drehbaren Antriebskomponenten und die relativ zueinander drehbaren Bremskomponenten zusammen eine Aktoranordnung. Dabei ist die Aktoranordnung zwischen den wenigstens zwei Lagerstellen angeordnet. Insbesondere ist an den axialen Stirnseiten der Aktoranordnung jeweils wenigstens eine Lagerstelle angeordnet. Insbesondere sind sämtliche Antriebskomponenten und sämtliche Bremskomponenten zwischen den wenigstens zwei Lagerstellen angeordnet. Insbesondere sind die Lagerstellen auf gegenüberliegenden Seiten der Aktoreinrichtung bzw. der Aktoranordnung angeordnet.

Die Lagerstellen sind insbesondere nur außerhalb der Aktoranordnung angeordnet. Insbesondere sind zwischen den relativ zueinander drehbaren Antriebskomponenten und den relativ zueinander drehbaren Bremskomponenten keine Lagerstellen und insbesondere auch keinerlei andere Lagerungen ausgebildet. Insbesondere befinden sich keine Lagerstellen und insbesondere auch sonst keinerlei Lagerungen innerhalb der Aktoranordnung. Insbesondere erfolgt die Lagerung der Aktoranordnung ausschließlich an dessen axialen Stirnseiten. Insbesondere ist dann jeder axialen Stirnseite der Aktoranordnung jeweils wenigstens eine und vorzugsweise nur eine Lagerstelle.

Es ist bevorzugt und vorteilhaft, dass die relativ zueinander drehbaren Antriebskomponenten und die relativ zueinander drehbaren Bremskomponenten ausschließlich mittels ihrer Befestigung an der Aufnahmestruktur und der Welleneinrichtung drehbar gelagert sind. Insbesondere wird die relative Drehbarkeit zwischen den Bremskomponenten und auch die relative Drehbarkeit zwischen den Antriebskomponenten durch die wenigstens zwei Lagerstellen und vorzugsweise ausschließlich durch die wenigstens zwei Lagerstellen bereitgestellt.

Insbesondere sind die Bremseinrichtung und die Antriebseinrichtung axial benachbart zueinander teilweise auf der Welleneinrichtung und teilweise an der Aufnahmestruktur befestigt. Insbesondere sind die Antriebskomponenten und die Bremskomponenten nur mittels der wenigstens zwei (nur zwei) Lagerstellen aneinander gelagert. Insbesondere sind auch die Bremseinrichtung und die Antriebseinrichtung nur mittels der Lagereinrichtung mit ihren wenigstens zwei Lagerstellen drehbar auf der Welleneinrichtung gelagert. Insbesondere sind die Aufnahmestruktur und die Welleneinrichtung ausschließlich mittels der wenigstens zwei (nur zwei) Lagerstellen drehbar aneinander gelagert. Dadurch kann auf eine separate Lagerung für die Bremskomponenten bzw. Antriebskomponenten verzichtet werden.

Insbesondere ist eine Antriebskomponente drehfest mit der Welleneinrichtung verbunden. Insbesondere ist eine Bremskomponente drehfest mit der Welleneinrichtung verbunden.

Es ist bevorzugt und vorteilhaft, dass die Aufnahmestruktur wenigstens zwei Tragwände umfasst, welche insbesondere quer zur Längsachse der Welleneinrichtung (bzw. quer zur Drehachse bzw. quer zur axialen Richtung) verlaufen. Vorzugsweise sind die Lagerstellen an den Tragwänden angebracht. Insbesondere umfassen die Lagerstellen jeweils wenigstens zwei relativ zueinander drehbare Lagerteile, wobei jeweils ein Lagerteil an den Tragwänden und ein Lagerteil an der Welle angebracht ist. Insbesondere ist die Aktoranordnung zwischen den wenigstens zwei Tragwänden angeordnet. Insbesondere wird die Aktoranordnung in axialer Richtung durch die Tragwände eingeschlossen.

Insbesondere schließen die Tragwände einen Gehäuseraum, in welchem die Aktoranordnung untergebracht ist, nach axial außen ab. Insbesondere wird der Gehäuseraum durch eine Basiswand nach radial außen abgeschlossen. Insbesondere wird der Gehäuseraum nach radial innen durch die Welleneinrichtung abgeschlossen. Insbesondere verlaufen die Tragwände im Wesentlichen in radialer Richtung. Insbesondere umfasst die Basiswand einen Aufnahmeflansch zur Befestigung eines elektrischen Anschlusses und/oder einer Drehbegrenzungseinrichtung und/oder einer Sensoreinrichtung. Die Basiswand kann vorzugsweise mit der Karosserie drehfest verbunden werden. Das Drehmoment wird insbesondere über die Basiswand abgeführt.

Es ist bevorzugt und vorteilhaft, dass die Tragwände eine (sich in Umfangsrichtung erstreckende) Basiswand der Aufnahmestruktur (mitsamt der daran befestigten Bauteile) an den Lagerstellen abstützen. Unter einer solchen Abstützung wird im Rahmen der vorliegenden Erfindung auch verstanden, dass sich die Lagerstellen über die Tragwände an der Basiswand abstützen können. Insbesondere stützt sich die Basiswand über die Tragwände und die Lagerstellen an der Welleneinrichtung ab. Insbesondere stützt sich die Welleneinrichtung über die Lagerstellen und die Tragwände an der Basiswand ab. Dabei kann sowohl die Basiswand zwecks Drehmomentabstützung (insbesondere an einer Karosserie) befestigt sein, während sich die Welleneinrichtung dreht. Ebenso kann die Welleneinrichtung zwecks Drehmomentabstützung befestigt sein, während sich die Aufnahmestruktur im Betrieb dreht.

Insbesondere weisen die Tragwände eine scheibenförmige Grundgeometrie auf. Insbesondere weist die Basiswand eine rohrartige Grundgeometrie auf. Insbesondere ist die der Bremseinrichtung zugewandte Tragwand mit der Basiswand und vorzugsweise mit einem magnetisch leitfähigen Abschnitt der Basiswand verschraubbar. Das ermöglicht eine besonders einfache Montage und Befüllung des Spalts mit magnetorheologische Medium.

In einer vorteilhaften Ausgestaltung umfasst eine der Bremseinrichtung zugewandte Tragwand wenigstens einen Dichtungsträgerabschnitt für wenigstens eine Dichteinheit. Die Dichteinheit dient insbesondere zur Abdichtung eines wenigstens zum Teil mit einem magnetorheologischen Medium gefüllten Spalts. Durch eine solche Funktionsintegration können Bauraum, Gewicht und Bauteile eingespart werden.

Vorzugsweise ist der Dichtungsträgerabschnitt (und auch die wenigstens eine Dichtungseinheit) näher zu der Welleneinrichtung und/oder zu der Lagerstelle als zu der Basiswand und/oder einer radialen Außenseite der Tragwand angeordnet. Dadurch wird dem Verschleiß der Dichtung vorteilhaft entgegengewirkt und der Reibradius (gegeneinander reibende Flächen) wird verkleinert. Dies führt zu einem geringeren Grund- bzw. Schleppmoment. Insbesondere ist der Dichtungsträgerabschnitt näher zu der Welleneinrichtung als zu einer Spuleneinrichtung der Bremseinrichtung angeordnet.

In einer vorteilhaften Weiterbildung ist an dem Dichtungsträgerabschnitt wenigstens eine als berührende Dichtung ausgebildete Dichteinheit angeordnet. Insbesondere dichtet die Dichteinheit zu einer der Bremskomponenten berührend ab. Beispielsweise ist die Dichteinheit als eine Lippendichtung oder dergleichen ausgebildet. Insbesondere dichtet die Dichteinheit den Spalt zwischen der Tragwand und der Bremskomponente ab. Zusätzlich oder alternativ kann die Dichteinheit auch zur Welleneinrichtung berührend abdichten.

In einer ebenfalls vorteilhaften Weiterbildung ist an dem Dichtungsträgerabschnitt wenigstens eine als berührungslose Dichtung ausgebildete Dichteinheit angeordnet. Vorzugsweise dichtet die Dichteinheit zu der Welleneinrichtung berührungslos ab. Insbesondere dient die Dichteinheit zur berührungslosen Abdichtung zwischen der Welleneinrichtung und der Tragwand. Insbesondere ist die berührungslose Dichtung in Bezug auf die axiale Richtung zwischen der Lagerstelle und der Bremskomponente angeordnet.

Beispielsweise ist die Dichteinheit als eine Magnetdichtung oder dergleichen ausgebildet. Insbesondere hat der Dichtungsträgerabschnitt dann wenigstens eine umlaufende Nut zur Aufnahme wenigstens eines ringförmigen Magnets oder mehrerer einzelner Magnete. Eine solche Dichtung eignet sich besonders gut zum Zurückhalten des magnetorheologischen Mediums im Spalt. Zusätzlich oder alternativ kann die Dichteinheit auch berührungslos zu einer der Bremskomponenten abdichten.

Besonders bevorzugt sind an dem Dichtungsträgerabschnitt wenigstens zwei Dichteinheiten angeordnet. Insbesondere wird der Spalt durch eine berührende Dichtung und eine berührungslose Dichtung abgedichtet. Vorzugsweise ist die berührende Dichtung der berührungslosen Dichtung vorangeschaltet.

Es ist möglich und vorteilhaft, dass eine der Bremseinrichtung zugewandte Tragwand eine Innenkontur aufweist, welche einer Änderung der axialen Breite einer der Bremskomponenten folgt. Insbesondere weist die Innenkontur einen abgewinkelten und/oder gekrümmten Verlauf auf. Insbesondere verläuft die Innenkontur in Richtung der Bremskomponente, wenn die Bremskomponente schmaler wird. Insbesondere verläuft die Innenkontur in einer von der Bremskomponente abgewandte Richtung, wenn die Bremskomponente breiter wird. Dadurch wird das Volumen des Spalts nicht unnötig vergrößert, wenn die Bremskomponente schmaler wird. Die Änderung der axialen Breite ermöglicht im Bereich der Spuleneinrichtung einen besonders großen Radius, wodurch höhere Bremsmomente erzielt werden können.

Die Bremskomponente ändert ihre Breite insbesondere entlang ihrer radialen Erstreckung. Insbesondere erreicht die Bremskomponente ihre maximale Breite an demjenigen axialen Ende, an welchem eine Spuleneinrichtung angeordnet ist und/oder welches einer Spuleneinrichtung zugewandt ist.

Insbesondere weist eine der Bremseinrichtung zugewandte Tragwand einen (nach axial außen) hervorstehenden Flanschabschnitt auf. Insbesondere umschließt der Flanschabschnitt die (der Tragwand zugeordnete) Lagerstelle in Umfangsrichtung wenigstens teilweise. Insbesondere weist eine der Bremseinrichtung zugewandte Tragwand einen (nach axial außen) hervorstehenden Anbindungsabschnitt auf. Insbesondere ist der Anbindungsabschnitt mit der Basiswand verbindbar und vorzugsweise verschraubbar. Insbesondere liegen der Anbindungsabschnitt und der Flanschabschnitt wenigstens abschnittsweise auf einer gemeinsamen radialen Fluchtlinie. Das ermöglicht eine kompakte Bauweise mit einem besonders günstigen Verlauf der Lagerkräfte.

Vorzugsweise weist eine der Bremseinrichtung zugewandte Tragwand eine (radial verlaufende) Trennwand auf. Insbesondere grenzt die Trennwand die (der Tragwand zugeordnete) Lagerstelle und eine der Bremskomponenten räumlich voneinander ab. Insbesondere stellt die Trennwand wenigstens teilweise den Dichtungsträgerabschnitt bereit. Insbesondere ist der Flanschabschnitt an der Trennwand angeordnet.

In allen Ausgestaltungen ist es besonders bevorzugt, dass eine der Bremseinrichtung zugewandte Tragwand nicht magnetisch leitfähig ausgebildet ist. Insbesondere ist die Leitfähigkeit der Tragwand so ausgelegt, dass die Tragwand im Betrieb der Spuleneinrichtung keinen Teil eines Magnetkreises für ein Magnetfeld einer elektrischen Spuleneinrichtung der Bremseinrichtung bildet. Unter dem Magnetkreis wird insbesondere der Magnetkreis verstanden, durch welchen ein von der Spuleneinrichtung erzeugtes Magnetfeld im Betrieb der Bremseinrichtung verläuft.

Im Rahmen der vorliegenden Erfindung wird unter einem magnetisch nicht leitfähigen Werkstoff insbesondere ein Werkstoff mit einer Permeabilitätszahl von kleiner zehn und vorzugsweise ca. eins verstanden. Als magnetisch leitfähig bzw. leitend werden hier insbesondere Werkstoffe mit einer Permeabilitätszahl von größer zehn und vorzugsweise ferromagnetische Stoffe verstanden. Die magnetische Leitfähigkeit ist dabei die "relative magnetische Permeabilität", die auch vereinfacht "magnetische Permeabilität" genannt wird.

In allen Ausgestaltungen ist es besonders bevorzugt, dass die Aufnahmestruktur, insbesondere die Basiswand, wenigstens abschnittsweise magnetisch leitfähig ausgebildet ist. Vorzugsweise stellt der magnetisch leitfähige Abschnitt der Aufnahmestruktur wenigstens einen Teil einer drehfest mit der Aufnahmestruktur verbundenen Bremskomponente bereit. Insbesondere werden der magnetisch leitfähige Abschnitt der Aufnahmestruktur und wenigstens ein Abschnitt der Bremskomponente durch dasselbe Bauteil bereitgestellt. Insbesondere bildet der magnetisch leitfähig ausgebildete Abschnitt der Aufnahmestruktur einen Teil des Magnetkreises für das Magnetfeld der elektrischen Spuleneinrichtung.

Es ist möglich und vorteilhaft, dass an der Aufnahmestruktur wenigstens eine Dichtungstragscheibe befestigt ist. Insbesondere erstreckt sich die Dichtungstragscheibe von der Basiswand aus in Richtung der Welleneinrichtung. Insbesondere ist an der Dichtungstragscheibe wenigstens eine Dichteinheit angeordnet, welche zu einer der Bremskomponenten hin und/oder zu der Welleneinrichtung hin abdichtet. Insbesondere ist diese Dichteinheit als eine berührende Dichtung und beispielsweise als eine Lippendichtung ausgebildet. Möglich ist auch, dass diese Dichteinheit als eine berührungslose Dichtung ausgebildet ist. Insbesondere ist die Dichtungstragscheibe nicht magnetisch leitfähig ausgebildet. Insbesondere ist die Dichteinheit an einem der Welleneinrichtung zugewandten radialen Ende der Dichtungstragscheibe befestigt. Insbesondere ist die Dichteinheit so an der Dichtungstragscheibe befestigt, dass sie sich näher an der Welleneinrichtung als an der Basiswand und/oder einer Spuleneinrichtung befindet.

Insbesondere ist dort, wo wenigstens eine Dichteinheit berührend an der Bremskomponente anliegt, wenigstens teilweise ein Verstärkungselement zur Vermeidung von reibungsbedingtem Verschleiß angeordnet. Beispielsweise ist das Verstärkungselement als eine Anlaufscheibe oder dergleichen ausgebildet.

Es ist möglich, dass wenigstens eine der Tragwände und vorzugsweise wenigstens die der Bremseinrichtung zugewandte Tragwand als ein Umformteil ausgebildet ist. Vorzugsweise sind auch die Basiswand und/oder die Dichtungstragscheibe als Umformteile ausgebildet. Die Bauteile können auch durch andere geeignete Herstellungsarten hergestellt sein.

In vorteilhaften Weiterbildung ist eine elektrische Spuleneinrichtung der Bremseinrichtung zwischen wenigstens zwei magnetisch leitfähigen (und sich in radialer Richtung erstreckenden) Spulenträgerwänden aufgenommen. Vorzugsweise stellen die relativ zueinander drehbaren Bremskomponenten jeweils wenigstens eine Spulenträgerwand bereit. Insbesondere ist eine Spulenträgerwand an der einen Bremskomponente und eine gegenüberliegende Spulenträgerwand an der anderen Bremskomponente befestigt. Insbesondere wird eine Spulenträgerwand durch einen magnetisch leitfähigen Abschnitt der Basiswand bereitgestellt. Eine solche Aufteilung der Spulenträgerwände auf beide Bremskomponenten ermöglicht eine besonders einfache Montage der Vorrichtung. Beispielsweise kann die Spuleneinrichtung aus axialer Richtung auf eine der Bremskomponenten aufgeschoben werden, ohne dass sich dadurch eine ungünstige Unterbrechung im Magnetkreis ergeben würde. Möglich ist auch, dass die Spulenträgerwände an einer Bremskomponente ausgebildet sind.

In einer bevorzugten Weiterbildung umfasst die Vorrichtung wenigstens eine Drehbegrenzungseinrichtung, welche dazu geeignet und ausgebildet ist, die Bewegbarkeit des Übertragungselements mittels wenigstens einer Endanschlageinheit mechanisch zu blockieren und insbesondere auch freizugeben. So kann beispielsweise die Drehbarkeit eines Lenkrads sicher blockiert werden, um ein Abstützen zu ermöglichen.

Vorzugsweise ist wenigstens eine Lagerstelle der wenigstens zwei Lagerstellen zwischen der Aktoranordnung und der Drehbegrenzungseinrichtung angeordnet. Insbesondere ist die Drehbegrenzungseinrichtung außerhalb des Gehäuseraums angeordnet. Insbesondere ist die Drehbegrenzungseinrichtung an einem axialen Ende der Aufnahmestruktur und/oder der Welleneinrichtung angeordnet. Insbesondere ist die Drehbegrenzungseinrichtung außerhalb der Aktoranordnung angeordnet.

Insbesondere greift die Endanschlageinheit zum Blockieren der Bewegbarkeit des Übertragungselements formschlüssig in eine Koppelstruktur. Insbesondere ist die Koppelstruktur an der Aufnahmestruktur und vorzugsweise an wenigstens einer der Tragwände angeordnet. Insbesondere umfasst die Koppelstruktur wenigstens einen Vorsprung und/oder wenigstens eine Vertiefung. Insbesondere ist die Endanschlageinheit drehfest mit der Welleneinrichtung verbunden. Möglich ist auch, dass die Endanschlageinheit an der Aufnahmestruktur und beispielsweise an der Tragwand angeordnet ist. Dann ist die Koppelstruktur insbesondere drehfest mit der Welleneinrichtung verbunden.

Die Vorrichtung umfasst vorzugsweise wenigstens eine Sensoreinrichtung zur Erfassung einer charakteristischen Kenngröße für die Bewegung des Übertragungselements. Insbesondere ist die Sensoreinrichtung außerhalb eines zwischen den Tragwänden aufgespannten Gehäuseraums angeordnet. Insbesondere ist die Sensoreinrichtung außerhalb der Aktoranordnung angeordnet. Insbesondere befindet sich die Sensoreinrichtung an einem axialen Ende der Welleneinrichtung. Insbesondere ist die Sensoreinheit an einem der Bremseinrichtung gegenüberliegenden axialen Ende angeordnet.

Vorzugsweise umfasst die Aufnahmestruktur wenigstens eine Gehäuseeinrichtung oder ist als eine solche ausgebildet. Vorzugsweise sind in der Gehäuseeinrichtung die Antriebseinrichtung und die Bremseinrichtung gemeinsam untergebracht (integriert) und insbesondere auch befestigt. Insbesondere umfasst die Gehäuseeinrichtung wenigstens ein Gehäuse oder ist als ein solches ausgebildet. Insbesondere sind die Antriebseinrichtung und die Bremseinrichtung und wenigstens abschnittsweise (zu einem überwiegenden Teil) auch die Welleneinrichtung innerhalb eines Gehäuseraums der Gehäuseeinrichtung untergebracht.

Die Gehäuseeinrichtung dient insbesondere zur Einhausung wenigstens einer der nachfolgenden Komponenten: wenigstens eine (vorzugsweise beide) der Antriebskomponenten, die Motorspule, wenigstens eine (vorzugsweise beide) der Bremskomponenten, der Wirkspalt, das magnetorheologische Medium, die Spuleneinrichtung der Bremseinrichtung, die Welleneinrichtung.

In einer vorteilhaften Weiterbildung verbindet die Aufnahmestruktur die Antriebseinrichtung und die Bremseinrichtung zu einem Vormontage-Zusammenbau. Insbesondere kann der Vormontage-Zusammenbau als eine Einheit gehandhabt werden. Der Vormontage-Zusammenbau kann z. B. als eine Einheit in einem Fahrzeug oder einer anderen Vorrichtung, die mittels der Vorrichtung bzw. Bedieneinrichtung gesteuert bzw. gelenkt werden soll, montiert werden.

Vorzugsweise sind die Antriebseinrichtung und die Bremseinrichtung axial (bzw. in axialer Richtung der Welleneinrichtung) hintereinander angeordnet. Insbesondere sind die Antriebseinrichtung und die Bremseinrichtung dabei abschnittsweise (berührend) miteinander gekoppelt.

Die Welleneinrichtung ist insbesondere als eine Welle ausgebildet oder umfasst wenigstens eine solche. Insbesondere sind die Antriebseinrichtung und/oder die Bremseinrichtung in der Art eines Direktantriebs mit der Welleneinrichtung und insbesondere auch mit dem Übertragungselement verbunden. Insbesondere ist eine Relativbewegung zwischen der Welleneinrichtung und der Aufnahmestruktur mittels der Antriebseinrichtung antreibbar und mittels der Bremseinrichtung bremsbar.

Insbesondere ist die Lagereinrichtung zwischen der Welleneinrichtung und der Aufnahmestruktur angeordnet. Wenn im Rahmen der vorliegenden Erfindung von einer Lagerung der Welleneinrichtung an der Aufnahmestruktur die Rede ist, können die Welleneinrichtung drehbar und die Aufnahmestruktur feststehend sein. Möglich ist aber auch, dass die Aufnahmestruktur drehbar und die Welleneinrichtung feststehend ausgebildet sind.

Insbesondere ist die Welleneinrichtung (drehfest) mit dem Übertragungselement gekoppelt. Insbesondere sind die Welleneinrichtung und das Übertragungselement derart gekoppelt, dass sie (nur) gemeinsam gedreht werden können, während die Aufnahmestruktur vorzugsweise feststeht. Dabei können die Welleneinrichtung und das Übertragungselement separat ausgebildet oder einstückig miteinander verbunden sein. Beispielsweise ist das Übertragungselement ein Abschnitt der Welleneinrichtung. Insbesondere ist die Aufnahmestruktur feststehend ausgebildet. Insbesondere ist die Aufnahmestruktur (drehfest) an einer feststehenden Haltestruktur beispielsweise einer Karosseriestruktur eines Fahrzeugs angebunden. Insbesondere ist eine Bewegung des Übertragungselements auf die Welleneinrichtung übertragbar und umgekehrt.

Möglich ist auch, dass die Aufnahmestruktur (drehfest) mit dem Übertragungselement gekoppelt ist. Insbesondere sind die Aufnahmestruktur und das Übertragungselement derart gekoppelt, dass sie (nur) gemeinsam gedreht werden können, während die Welleneinrichtung dabei feststeht. Dabei kann das Übertragungselement separat ausgebildet oder einstückig mit der Aufnahmestruktur verbunden sein. Insbesondere ist die Welleneinrichtung feststehend ausgebildet. Insbesondere ist die Welleneinrichtung (drehfest) an einer feststehenden Haltestruktur beispielsweise einer Karosseriestruktur eines Fahrzeugs angebunden. Insbesondere ist eine Bewegung des Übertragungselements auf die Aufnahmestruktur übertragbar und umgekehrt. In einer solchen Ausführung kann die Welleneinrichtung auch als eine Achse bezeichnet werden.

Insbesondere wirken die Antriebseinrichtung und die Bremseinrichtung ohne ein dazwischengeschaltetes Getriebe und vorzugsweise direkt auf die Welleneinrichtung ein. Insbesondere bildet die Welleneinrichtung eine gemeinsame Welle (bzw. Achse) für die Antriebseinrichtung und die Bremseinrichtung und vorzugsweise auch für das Übertragungselement. Insbesondere sind das Übertragungselement und die Antriebseinrichtung und die Bremseinrichtung ausschließlich mittels der Welleneinrichtung drehbar an der Aufnahmestruktur gelagert. Insbesondere ist die Welleneinrichtung das einzige Bauteil der Vorrichtung, welches (mittels wenigstens einer Lagereinrichtung) an der Aufnahmestruktur drehbar gelagert ist. Dabei sind die Antriebseinrichtung und die Bremseinrichtung und insbesondere auch das Übertragungselement vorzugsweise nur dadurch drehbar an der Aufnahmestruktur gelagert, dass sie an der Welleneinrichtung (drehfest) befestigt sind. Eine solche Ausführung kann sowohl mit einer feststehenden Welleneinrichtung als auch mit einer feststehenden Aufnahmestruktur umgesetzt werden.

Insbesondere ist die Welleneinrichtung ohne ein dazwischengeschaltetes Getriebe und vorzugsweise direkt mit dem Übertragungselement verbunden. Möglich ist auch, dass die Aufnahmestruktur ohne ein dazwischengeschaltetes Getriebe und vorzugsweise direkt mit dem Übertragungselement verbunden ist. Dabei können die Welleneinrichtung oder die Aufnahmestruktur fest und insbesondere einstückig mit dem Übertragungselement verbunden sein. Möglich ist aber auch, dass das Übertragungselement als ein separates Bauteil ausgebildet ist, welches drehfest mit der Welleneinrichtung oder der Aufnahmestruktur verbunden ist.

Die Welleneinrichtung könnte alternativ über ein Getriebe mit dem Übertragungselement verbunden sein. Bevorzugt ist dann zwischen dem Übertragungselement und der Antriebseinreichung sowie der Bremseinrichtung eine Übersetzung, von z. B. 1:5, vorgesehen. Dadurch kann die Baugröße der Antriebseinrichtung bzw. der Bremseinrichtung kleiner gewählt werden.

Insbesondere sind wenigstens eine erste Antriebskomponente und wenigstens eine relativ zur ersten Antriebskomponente drehbare zweite Antriebskomponente vorgesehen. Insbesondere umfassen die relativ zueinander drehbaren Antriebskomponenten wenigstens einen Antriebsstator und wenigstens einen Antriebsrotor. Insbesondere sind wenigstens eine erste Bremskomponente und wenigstens eine relativ zur ersten Bremskomponente drehbare zweite Bremskomponente vorgesehen. Beispielsweise sind wenigstens ein Bremsstator und wenigstens ein Bremsrotor vorgesehen.

Insbesondere ist die (erste) Antriebskomponente und/oder die (erste) Bremskomponente ohne ein dazwischengeschaltetes Getriebe und vorzugsweise direkt mit der Welleneinrichtung verbunden. Die (erste) Antriebskomponente und/oder die (erste) Bremskomponente können einstückig mit der Welleneinrichtung verbunden sein. Insbesondere kann die Welleneinrichtung nur zusammen mit der ersten Antriebskomponente und/oder der ersten Bremskomponente gedreht werden.

Insbesondere ist die (zweite) Antriebskomponente und/oder die (zweite) Bremskomponente ohne ein dazwischengeschaltetes Getriebe und vorzugsweise direkt mit der Aufnahmestruktur verbunden. Die (zweite) Antriebskomponente und/oder die (zweite) Bremskomponente können einstückig mit der Aufnahmestruktur verbunden sein. Insbesondere kann die Aufnahmestruktur nur zusammen mit der zweiten Antriebskomponente und/oder der zweiten Bremskomponente gedreht werden.

Es ist möglich, dass eine (erste) der relativ zueinander drehbaren Bremskomponenten mit einer (ersten) der relativ zueinander drehbaren Antriebskomponenten drehfest verbunden ist. Insbesondere ist die Bremskomponente mittels der Welleneinrichtung mit der Antriebskomponente drehfest verbunden. Es ist möglich, dass diese Bremskomponente einstückig mit der Antriebskomponente und insbesondere auch mit der Welleneinrichtung verbunden ist. Beispielsweise bilden die Welleneinrichtung und die Bremskomponente und die Antriebskomponente ein einstückiges Bauteil.

In einer vorteilhaften Weiterbildung erfolgen ein elektrischer Anschluss der Antriebseinrichtung und/oder ein elektrischer Anschluss der Bremseinrichtung (nur) über die Aufnahmestruktur und/oder (nur) über die Welleneinrichtung. Insbesondere verläuft der elektrische Anschluss durch die Aufnahmestruktur. Insbesondere sind die Komponenten der Antriebseinrichtung und/oder der Bremseinrichtung, welche über den elektrischen Anschluss mit Energie versorgt bzw. angesteuert werden müssen, an der feststehenden Aufnahmestruktur angeordnet. Insbesondere verlaufen die Leitungen zur Versorgung der Aktoreinrichtung (z. B. der Spuleneinrichtung) durch die Aufnahmestruktur und/oder entlang der Aufnahmestruktur.

Wenn die Welleneinrichtung feststehend ausgebildet ist, sind diese Komponenten insbesondere an der Welleneinrichtung angeordnet. Dann erfolgt der elektrische Anschluss insbesondere über die Welleneinrichtung. Insbesondere verläuft der elektrische Anschluss durch die Welleneinrichtung.

Der elektrische Anschluss kann aber auch über die nicht feststehende Komponente (Aufnahmestruktur bzw. Welleneinrichtung) erfolgen. Dann sind beispielsweise Wickelfedern oder Schleifkontakte oder dergleichen vorgesehen.

Der elektrische Anschluss ist insbesondere für die Spuleneinrichtung der Bremseinrichtung und/oder für die Motorspule(n) der Antriebseinrichtung vorgesehen. Der elektrische Anschluss kann auch für eine Sensoreinrichtung dienen.

Vorzugsweise weist der Anschluss wenigstens eine in Richtung des Übertragungselements ausgerichtete Zugangsöffnung auf. Insbesondere ist der Anschluss an einem axialen Ende der Vorrichtung angeordnet, welches dem axialen Ende gegenüberliegt, an dem das Übertragungselement angeordnet ist. Das ermöglicht beispielsweise eine einfache und visuelle Kontrolle der Steckverbindung bei der Endmontage bzw. Lenkradmontage.

In einer besonders vorteilhaften Weiterbildung stellt die drehfest mit der Welleneinrichtung verbundene Antriebskomponente wenigstens teilweise die drehfest mit der Welleneinrichtung verbundene Bremskomponente bereit. Das ermöglicht eine Bauteilintegration, mit der Bauraum, Gewicht und konstruktiver Aufwand erheblich eingespart werden. Insbesondere teilen sich die drehfest mit der Welleneinrichtung verbundene Antriebskomponente und die drehfest mit der Welleneinrichtung verbundene Bremskomponente wenigstens ein gemeinsames Bauteil. Insbesondere ist dieses Bauteil magnetisch leitfähig ausgebildet. Insbesondere ist dieses Bauteil im Betrieb der Aktoreinrichtung von einem Magnetfeld durchflossen und vorzugsweise eine Komponente eines Magnetkreises.

Es ist vorteilhaft und bevorzugt, dass die drehfest mit der Aufnahmestruktur verbundene Antriebskomponente wenigstens teilweise die drehfest mit der Aufnahmestruktur verbundene Bremskomponente bereitstellt. Auch das ermöglicht eine besonders vorteilhafte Bauteilintegration. Insbesondere teilen sich die drehfest mit der Aufnahmestruktur verbundene Antriebskomponente und die drehfest mit der Aufnahmestruktur verbundene Bremskomponente wenigstens ein gemeinsames Bauteil. Insbesondere ist dieses Bauteil magnetisch leitfähig ausgebildet. Insbesondere ist dieses Bauteil im Betrieb der Aktoreinrichtung von einem Magnetfeld durchflossen und vorzugsweise eine Komponente eines Magnetkreises. Insbesondere berührt die drehfest mit der Aufnahmestruktur verbundene Antriebskomponente die drehfest mit der Aufnahmestruktur verbundene Bremskomponente. Insbesondere sind die drehfest mit der Aufnahmestruktur verbundene Antriebskomponente und die drehfest mit der Aufnahmestruktur verbundene Bremskomponente direkt und insbesondere berührend miteinander verbunden.

Die Antriebseinrichtung umfasst vorzugsweise wenigstens einen Elektromotor oder ist als ein solcher ausgebildet. Insbesondere ist der Elektromotor als ein Axialflussmotor und vorzugsweise als ein Scheibenläufer ausgebildet. Möglich ist, dass der Elektromotor als ein Glockenanker-Motor ausgebildet ist. Insbesondere ist der Elektromotor in axialer Richtung kürzer als in radialer Richtung bzw. im Durchmesser. Solche Elektromotoren eignen sich besonders vorteilhaft für die Integration in der gemeinsamen Aufnahmestruktur. Der Axialflussmotor bietet viele Vorteile, allerdings erfordert er auch eine besondere Anordnung der Bauteile und eine spezielle Bauform (z. B. scheibenförmig statt zylindrisch, axiale Länge). Zudem zeigt er ein anderes Verhalten bei bestimmten Drehzahlen. Mit der hier vorgestellten Erfindung können der Axialflussmotor und seine Vorteile besonders gut konstruktiv eingebunden und genutzt werden.

Möglich sind auch andere geeignete Motorbauarten, wie z. B. ein Radialflussmotor (insbesondere Außenläufer-Motor oder ein Innenläufer-Motor, bürstenloser Gleichstrommotor, Asynchronmotor, etc.) oder ein Wanderwellenmotor oder ein Ultraschallmotor oder eine Kombination aus den hier vorgestellten Motorbauarten. Vorzugsweise kann die Antriebseinrichtung das Drehmoment selbst erzeugen (ohne dass z. B. zuvor eine Feder gespannt werden muss). Der Elektromotor kann nur eine einzige Motorspulenwicklung aufweisen. D.h., etwaige Redundanzanforderungen werden durch einen einfachen Elektromotor mit einer Motorspulenwicklung in Kombination mit einer Bremseinrichtung erfüllt (=sog. hybride Redundanz). Alternativ ist es aber auch möglich, dass der Elektromotor zwei oder mehr voneinander unabhängige Motorspulenwicklungen aufweist, welche mit unterschiedlichen Steuereinrichtungen bzw. Energieversorgungen verbunden sind. Bei einem Ausfall einer der Energieversorgungen oder einer der Steuereinrichtungen oder einer der Spulenwicklungen ist die andere der Spulenwicklungen noch in der Lage, durch entsprechende Bestromung mittels der unabhängigen Energieversorgung ein Drehmoment zu erzeugen.

Es ist möglich, dass die Antriebseinrichtung wenigstens eine mechanische Kraftspeichereinrichtung umfasst oder als solche ausgebildet ist. Insbesondere ist die Kraftspeichereinrichtung durch Bewegen des Übertragungselements aufladbar. Insbesondere kann das Übertragungselement durch die in der Kraftspeichereinrichtung gespeicherte Energie in eine Bewegung versetzt werden. Insbesondere ist die Kraftspeichereinrichtung in der Aufnahmestruktur untergebracht.

Insbesondere dient die Kraftspeichereinrichtung zur Rückstellung des Übertragungselements aus einer ausgelenkten Stellung in eine Ruhestellung. Die von der Kraftspeichereinrichtung erzeugte bzw. unterstütze Bewegung des Übertragungselements und/oder die (Ruhe-) Stellung des Übertragungselements können dabei vorzugsweise mittels der Bremseinrichtung gezielt beeinflusst werden. Beispielsweise kann mittels der Bremseinrichtung eine Federkennlinie der Kraftspeichereinrichtung angepasst werden. Die Kraftspeichereinrichtung kann dazu einsetzbar sein, die Bewegbarkeit des Übertragungselements bei einem Störfall mit einem gezielten Drehmoment zu beaufschlagen.

Die Kraftspeichereinrichtung umfasst insbesondere wenigstens eine (mechanische) Feder. Möglich sind alle Bauarten von geeigneten mechanischen Federn (Drehfeder, Spiralfeder, Schenkelfeder etc.). Es ist möglich, dass die Kraftspeichereinrichtung den Elektromotor der Antriebseinrichtung unterstützt. Möglich ist auch, dass die Kraftspeichereinrichtung alleine das Drehmoment für die Bewegung des Übertragungselements bereitstellt. Insbesondere hat die Antriebseinrichtung dann keinen Elektromotor oder dergleichen.

Eine solche Kraftspeichereinrichtung ist bei einer Steer-by-Wire-Lenkung dann besonders vorteilhaft, wenn z. B. eine Feder mit niederer Maximalkraft und geringer Kraftzunahme über den Drehwinkel verwendet werden kann, damit die Summe aus Federkraft (Federdrehmoment) und Grundmoment bzw. Grundreibung bei voller Auslenkung den zulässigen (niederen Wert) für eine solche Lenkung nicht überschreitet, trotzdem aber noch eine schnelle Rückstellung ermöglicht. Mit der hier vorgestellten Erfindung können diese Vorteile besonders gut genutzt werden.

Insbesondere verläuft ein (Luft-) Spalt zwischen den relativ zueinander drehbaren Antriebskomponenten in radialer Richtung und/oder quer zu einer Drehachse der relativ zueinander drehbaren Antriebskomponenten bzw. zur Drehachse der Welleneinrichtung. Insbesondere verläuft das Magnetfeld des Elektromotors zumindest in dem Spalt zwischen den wenigstens zwei relativ zueinander drehbaren Antriebskomponenten parallel zur Drehachse der relativ zueinander drehbaren Antriebskomponenten bzw. zur Drehachse der Welleneinrichtung.

Es ist möglich, dass der Elektromotor wenigstens zwei (scheibenförmige) Statoren und wenigstens einen dazwischenliegenden Rotor aufweist. Möglich ist auch, dass der Elektromotor nur einen (scheibenförmigen) Stator aufweist, welche axial neben dem Rotor liegt. Insbesondere stellen die Antriebskomponenten den Stator und den Rotor bereit. Der Elektromotor kann insbesondere als Innenläufer (Rotor innen, Stator außen) oder als Außenläufer (Rotor außen, Stator innen) ausgebildet sein. Die Bremseinrichtung kann insbesondere als Innenläufer (feststehende Bremskomponente innen, drehbare Bremskomponente außen) oder als Außenläufer (feststehende Bremskomponente außen, drehbare Bremskomponente innen) ausgebildet sein.

Vorzugsweise ist zwischen den relativ zueinander drehbaren Bremskomponenten wenigstens ein umlaufender Spalt (sog. Wirkspalt) so ausgebildet. Insbesondere ist der Spalt wenigstens zum Teil mit einem magnetorheologischen Medium gefüllt. Insbesondere kann das im Spalt angeordnete Medium mittels der Spuleneinrichtung so beeinflusst werden, dass die relative Bewegbarkeit der Bremskomponenten gezielt gebremst werden kann.

Insbesondere weist der Spalt wenigstens abschnittsweise, vorzugsweise wenigstens an den (magnetorheologisch wirksamen) Spaltabschnitten, eine in Umfangsrichtung veränderliche Spalthöhe auf. Insbesondere weist eine der relativ zueinander drehbaren Bremskomponenten eine Außenkontur mit einem veränderlichen Außendurchmesser und insbesondere eine Sternkontur auf. Die Sternkontur hat insbesondere eine Mehrzahl an in radialer Richtung hervorstehenden Magnetfeldkonzentratoren.

Der Spalt der Bremseinrichtung weist vorzugsweise wenigstens zwei umlaufende und beabstandet zueinander angeordnete Spaltabschnitte auf. Insbesondere unterscheiden sich die Spaltabschnitte in ihrem minimalen und/oder maximalen Durchmesser. Insbesondere sind die Spaltabschnitte über einen umlaufenden Verbindungsspalt miteinander verbunden. Insgesamt stellt der Spalt dadurch einen umlaufenden, durchgängigen Aufnahmeraum für das Medium bereit. Die magnetorheologische Bremswirkung wird insbesondere durch die Spaltabschnitte bereitgestellt. Insbesondere ist die maximale Spalthöhe im Bereich der Spaltabschnitte geringer als im übrigen Bereich des Spalts und insbesondere im Verbindungsspalt.

Insbesondere liegen die Spaltabschnitte auf unterschiedlichen radialen Positionen (bzw. Durchmesserpositionen). Insbesondere ist ein Spaltabschnitt radial weiter innen und ein anderer Spaltabschnitt radial weiter außen. Insbesondere ist der Spalt gestuft ausgebildet. Insbesondere liegen die Spaltabschnitte dabei auf unterschiedlichen Stufen. Insbesondere weist wenigstens eine der Bremskomponenten wenigstens zwei umlaufende Stufenabschnitte auf. Die Stufenabschnitte weisen insbesondere unterschiedliche Durchmesser auf.

In einer vorteilhaften Weiterbildung stellt wenigstens eine der relativ zueinander drehbaren Bremskomponenten, insbesondere die im Betrieb feststehende Bremskomponente, wenigstens einen Aufnahmeraum für eine Wicklung einer elektrischen Spuleneinrichtung bereit. Insbesondere verläuft zwischen dem Aufnahmeraum und dem Spalt (insbesondere dem Verbindungsspalt) eine Bodenwandung. Insbesondere weist die Bodenwandung eine Stärke auf, welche geringer als eine maximale Höhe (Querschnittshöhe) des unterhalb der Bodenwandung verlaufenden Spalts ist. Dadurch kann die Bodenwandung aus einem magnetisch leitfähigen Werkstoff gefertigt werden, ohne dass es unterhalb des Aufnahmeraums zu einem magnetischen Kurzschluss kommt. Insbesondere ist die Bodenwandung integraler Bestandteil der Bremskomponente. Insbesondere trennt die Bodenwandung die Spuleneinrichtung von dem im Spalt befindlichen Medium hermetisch ab.

Insbesondere umfasst die Bremskomponente, welche den Aufnahmeraum aufweist, wenigstens zwei Wirkspaltwandungen. Insbesondere sind die Wirkspaltwandungen jeweils axial neben der Bodenwandung angeordnet. Insbesondere erstreckt sich eine der zwei Wirkspaltwandungen weiter nach radial innen als die Bodenwandung. Insbesondere erstreckt sich die Bodenwandung weiter nach radial innen als die andere der zwei Wirkspaltwandungen. Insbesondere begrenzen die Wirkspaltwandungen jeweils einen Spaltabschnitt nach radial außen. Insbesondere begrenzt eine der Wirkspaltwandungen den Aufnahmeraum nach axial außen.

Es ist bevorzugt und vorteilhaft, dass die Bodenwandung und die Wirkspaltwandungen und ein Teilabschnitt der Aufnahmestruktur einstückig miteinander verbunden sind. Insbesondere bilden die Bodenwandung und die Wirkspaltwandungen und der Teilabschnitt zusammen einen überwiegenden Teil der Bremskomponente oder sogar die gesamte Bremskomponente. Insbesondere ist wenigstens dieser Teil oder auch die Bremskomponente aus einem magnetisch leitfähigen Werkstoff gefertigt. Insbesondere ist dabei die ganze Bremskomponente einstückig ausgebildet.

Vorzugsweise bilden die Bodenwandung und die Wirkspaltwandungen und der Teilabschnitt ein rotationssymmetrisches (einstückiges) Drehteil. Das Drehteil kann insbesondere durch Drehen hergestellt werden. Weitere Bearbeitungen im Anschluss an das Drehen sind möglich. Möglich ist aber auch eine additive Fertigung (3D-Druck). Die Bremskomponente kann als ein solches Drehteil ausgebildet sein oder wenigstens ein solches umfassen. Insbesondere ist wenigstens das Drehteil aus einem magnetisch leitfähigen Werkstoff gefertigt.

Es kann auch auf die Bodenwandung verzichtet werden, so dass die Spule (bzw. wenn vorhanden der Spulenhalter) direkt mit Medium in Kontakt steht.

Bevorzugt und vorteilhaft ist, dass die Welleneinrichtung an dem Teilabschnitt gelagert ist. Insbesondere dient der Teilabschnitt zur Befestigung einer Lagerstelle (der Lagereinrichtung). Dabei kann die Welleneinrichtung drehbar oder auch feststehend ausgebildet sein.

In einer vorteilhaften Weiterbildung ist der Aufnahmeraum nach radial außen durch einen Deckelabschnitt der Aufnahmestruktur wenigstens teilweise verschlossen. Insbesondere ist der Abschnitt als ein Gehäusedeckel ausgebildet. Das ermöglicht eine einfache Montage der Bremskomponenten und Antriebskomponenten im Inneren der Aufnahmestruktur.

In einer bevorzugten und vorteilhaften Ausgestaltung ist vorgesehen, dass eine der relativ zueinander drehbaren Bremskomponenten, vorzugsweise die im Betrieb feststehende Bremskomponente, wenigstens einen Basisabschnitt und wenigstens einen äußeren Magnetflussflansch aufweist. Der Basisabschnitt weist insbesondere wenigstens einen nach axial außen offen ausgebildeten Aufnahmeraum für eine elektrische Spuleneinrichtung (insbesondere deren Wicklung) auf. Dabei ist der äußere Magnetflussflansch sowohl axial als auch radial zwischen der Spuleneinrichtung und dem Basisabschnitt angeordnet.

Vorzugsweise ist auch der äußere Magnetflussflansch nach axial außen offen ausgebildet. Insbesondere ist der Basisabschnitt mit der Aufnahmestruktur verbunden. Insbesondere ist die Welleneinrichtung an dem Basisabschnitt (mittels einer der Lagerstellen der Lagereinrichtung) gelagert.

Insbesondere weist der äußere Magnetflussflansch eine höhere magnetische Leitfähigkeit als der Basisabschnitt auf. Insbesondere weist die Spuleneinrichtung wenigstens eine Wicklung und wenigstens einen Spulenhalter zur Aufnahme der Wicklung auf. Insbesondere ist der Spulenhalter an dem äußeren Magnetflussflansch befestigt.

Insbesondere sind der Aufnahmeraum und der (Wirk-)Spalt nicht zueinander abgedichtet. Insbesondere ist die Spuleneinrichtung nicht durch andere Bauteile und insbesondere nicht durch magnetisch leitfähige Bauteile von dem im Spalt befindlichen Medium getrennt. Insbesondere liegen die Wicklung und insbesondere auch der Spulenhalter innerhalb des Spalts. Es ist möglich, dass der Spulenhalter Kontakt zum Medium hat.

Es ist bevorzugt und vorteilhaft, dass der äußere Magnetflussflansch wenigstens zwei Schenkel aufweist. Vorzugsweise begrenzt jeweils ein Schenkel einen Spaltabschnitt des (Wirk-)Spalts nach radial außen. Insbesondere sind die Schenkel L-förmig zueinander angeordnet. Insbesondere treffen die Schenkel aufeinander. Insbesondere sind die Schenkel einstückig miteinander verbunden. Insbesondere verläuft ein Schenkel im Wesentlichen radial und ein Schenkel im Wesentlichen axial.

Vorzugsweise weist eine der relativ zueinander drehbaren Bremskomponenten wenigstens einen Rotorabschnitt und wenigstens einen inneren Magnetflussflansch auf. Insbesondere handelt es sich um diejenige Bremskomponente, welche nicht den äußeren Magnetflussflansch aufweist. Insbesondere ist der Rotorabschnitt drehfest mit der Welleneinrichtung oder mit der Aufnahmestruktur drehfest und insbesondere einstückig verbunden. Vorzugsweise weist der Magnetflussflansch wenigstens zwei Schenkel auf. Insbesondere begrenzt jeweils ein Schenkel einen Spaltabschnitt des Spalts nach radial innen. Insbesondere sind die Schenkel L-förmig zueinander angeordnet. Insbesondere sind die Schenkel einstückig miteinander verbunden. Insbesondere verläuft ein Schenkel im Wesentlichen radial und der andere Schenkel im Wesentlichen axial.

Vorzugsweise sind der Rotorabschnitt und der innere Magnetflussflansch separat ausgebildet. Insbesondere sind der Rotorabschnitt und der innere Magnetflussflansch fest miteinander verbunden. Beispielsweise handelt es sich um zwei separate Bauteile, welche fest miteinander gefügt sind. Insbesondere weist der innere Magnetflussflansch eine höhere magnetische Leitfähigkeit als der Rotorabschnitt auf.

Möglich und ist aber auch, dass der Rotorabschnitt und der innere Magnetflussflansch einstückig miteinander verbunden sind. Dann weisen der Rotorabschnitt und der innere Magnetflussflansch dieselbe magnetische Leitfähigkeit auf.

In einer vorteilhaften Ausgestaltung ist vorgesehen, dass die Aufnahmestruktur (insbesondere wenigstens ein Strukturabschnitt der Aufnahmestruktur) und eine der wenigstens zwei relativ zueinander drehbaren Bremskomponenten einstückig miteinander verbunden sind. Insbesondere bilden die Aufnahmestruktur (vorzugsweise der Strukturabschnitt) und die Bremskomponente zusammen ein Strukturbauteil. Dabei ist bevorzugt, dass an dem Strukturbauteil die Welleneinrichtung gelagert ist. Insbesondere erfolgt die Lagerung mittels wenigstens einer Lagerstelle der Lagereinrichtung. Die Bremskomponente, welche Teil des Strukturbauteils ist, ist insbesondere nicht relativ zur Aufnahmestruktur drehbar bzw. drehfest an der Aufnahmestruktur.

Das Strukturbauteil trägt vorzugsweise wenigstens eine Lagerstelle der Lagereinrichtung für die Welleneinrichtung. Das Strukturbauteil ist insbesondere ein tragendes Bauteil der Aufnahmestruktur. Insbesondere ist das Strukturbauteil dazu geeignet und ausgebildet, wenigstens einen Teil der Lagerkräfte der Lagereinrichtung aufzufangen. Beispielsweise ist das Strukturbauteil eine tragende Wandung der Gehäuseeinrichtung.

Die Antriebseinrichtung und die Bremseinrichtung nutzen vorzugsweise wenigstens eine der folgenden Komponenten gemeinsam: Welleneinrichtung, Lagereinrichtung für die Lagerung der relativ zueinander drehbaren Antriebskomponenten und der relativ zueinander drehbaren Bremskomponenten, Dichtungseinrichtung, Drehmomentabstützung, elektrischer Anschluss.

In einer vorteilhaften Weiterbildung umfasst die Vorrichtung wenigstens eine Störfallsicherung, welche dazu geeignet und ausgebildet ist, die Bewegbarkeit des Übertragungselements wenigstens bei einem Störfall der Bremseinrichtung und/oder bei einem Störfall der Antriebseinrichtung mit einem gezielten Drehmoment (bzw. Bremsmoment) zu beaufschlagen. Dadurch wird das Übertragungselement insbesondere weder blockiert noch kann es widerstandslos bewegt werden. Das ist besonders bei einer Ausgestaltung als Bedieneinrichtung bzw. Lenkvorgabeeinrichtung von Vorteil.

Die Störfallsicherung umfasst insbesondere wenigstens eine Permanentmagneteinrichtung, deren Magnetfeld die Bewegbarkeit der Bremskomponenten mit einem definierten Drehmoment abbremst. Insbesondere ist das Magnetfeld der Permanentmagneteinrichtung im Normalbetrieb durch eine elektrische Spuleneinrichtung reduzierbar und/oder verstärkbar. Die Spuleneinrichtung der Störfallsicherung ist insbesondere die Spuleneinrichtung der Bremseinrichtung, welche im Normalbetrieb zu Erzeugung des Bremsmomentes dient. Die Störfallsicherung kann aber auch eine eigene Spuleneinrichtung aufweisen. Es ist möglich, dass das Magnetfeld der Permanentmagneteinrichtung im Normalbetrieb zur Unterstützung der Bremswirkung herangezogen wird.

Ein maximales Bremsmoment der Bremseinrichtung ist insbesondere größer und vorzugsweise um den Faktor zwei größer als ein maximales Drehmoment der Antriebseinrichtung. Möglich und vorteilhaft ist auch, dass das maximale Bremsmoment der Bremseinrichtung um den Faktor drei oder vier oder fünf oder sechs größer als ein maximales Drehmoment der Antriebseinrichtung ist. Insbesondere dient die Bremseinrichtung dazu, eine Lenkeinheit so zu blockieren, dass es als eine Ausstiegshilfe aus einem Fahrzeug dient.

Insbesondere stellt die Aktoreinrichtung wenigstens einen Endanschlag für die Bewegbarkeit des Übertragungselements bereit. Insbesondere kann dadurch eine Drehbarkeit (bei wenigstens einer definierten Winkelstellung) in wenigstens eine und vorzugsweise in beide Drehrichtungen begrenzt werden. Es ist möglich, dass mittels der Bremseinrichtung ein Bremsmoment erzeugbar ist, welches den Endanschlag bereitstellt. Zusätzlich oder alternativ kann wenigstens ein mechanischer Endaschlag vorgesehen sein. Dadurch kann ggf. das maximale Bremsmoment der Bremseinrichtung geringer ausgelegt werden.

In allen Ausgestaltungen ist es besonders bevorzugt, dass eine Bewegbarkeit des Übertragungselements mittels der Bremseinrichtung (vorzugsweise auch mit der Antriebseinrichtung) gezielt beeinflussbar ist, sodass am Übertragungselement haptisch wahrnehmbare Rückmeldungen bzw. Signale (sogenanntes Force-Feedback) erzeugbar sind. Insbesondere sind die Rückmeldungen erzeugbar, während das Übertragungselement wenigstens teilweise durch Muskelkraft und/oder wenigstens teilweise durch die Antriebseinrichtung bewegt wird. Beispielsweise kann die Bewegbarkeit des Übertragungselements während einer Eingabe (insbesondere während einer manuellen Bewegung des Übertragungselements) mittels der Bremseinrichtung (vorzugsweise auch mit der Antriebseinrichtung) gezielt beeinflusst werden. Es kann vorgesehen sein, dass die Erzeugung der haptisch wahrnehmbaren Rückmeldungen erfolgt, während das Übertragungselement stillsteht bzw. nicht durch Muskelkraft bewegt wird. Insbesondere kann die Antriebseinrichtung die haptischen Signale auch im Stillstand des Übertragungselements erzeugen. Beispielsweise sind als haptische Rückmeldungen Raster, Blockierungen, Vibrationen und/oder Endpunkte an dem Übertragungselement spürbar.

Insbesondere dient die Antriebseinrichtung dazu, das Übertragungselement gegen die Kraft einer manuellen Bewegung zu bewegen und/oder das Übertragungselement während und/oder nach einer manuellen Bewegung wieder zurückzustellen. Dabei können vorzugsweise zeitgleich haptisch wahrnehmbare Rückmeldungen (insbesondere mittels der Bremseinrichtung) erzeugt werden.

Das Übertragungselement ist insbesondere durch die Aktoreinrichtung (die Antriebseinrichtung) aktiv bewegbar. Das Übertragungselement ist insbesondere (auch) manuell bewegbar. Unter einer manuellen Bewegbarkeit wird im Rahmen der vorliegenden Erfindung eine wenigstens teilweise durch Muskelkraft verursachte Bewegbarkeit verstanden. Dabei kann die Bewegung nicht nur mittels der Hände, sondern auch mittels anderer muskelgekoppelter Körperstrukturen (Arme, Beine, Füße, Rücken, Rumpf, Bauch, Kopf, Kiefer etc.) verursacht sein. Das Übertragungselement kann beispielsweise als ein Hebel oder eine Welle oder dergleichen ausgebildet sein.

In einer vorteilhaften Weiterbildung ist die hier vorgestellte Vorrichtung als eine Bedieneinrichtung ausgebildet, welche insbesondere zum (manuellen) Vorgeben eines Steuerbefehls vorgesehen ist. Dann können die Begriffe "Vorrichtung" und "Bedieneinrichtung" insbesondere synonym verwendet werden. Das Übertragungselement ist dann insbesondere ein Bedienelement. Insbesondere ist eine Bewegbarkeit des Bedienelements wenigstens während einer Eingabe (insbesondere während einer manuellen Bewegung des Bedienelements) mittels der Bremseinrichtung (vorzugsweise auch mit der Antriebseinrichtung) gezielt beeinflussbar.

Besonders bevorzugt ist die Vorrichtung bzw. Bedieneinrichtung als eine Lenkvorgabeeinrichtung zum Vorgeben eines Lenkbefehls nach dem Steer-by-Wire-Konzept ausgebildet. Vorzugsweise ist das Übertragungselement bzw. Bedienelement dann als eine Lenkeinheit ausgebildet oder umfasst wenigstens eine solche. Im Rahmen einer solchen Lenkvorgabeeinrichtung kann der Begriff "Bedienelement" dann vorzugsweise durch den Begriff "Lenkeinheit" ersetzt werden. Die Anmelderin behält sich vor, eine solche Lenkvorgabeeinrichtung zu beanspruchen. Die Lenkeinheit kann z. B. ein Lenkrad oder ein Steuerrad oder ein Joystick sein.

In einer Ausgestaltung als Lenkvorgabeeinrichtung ist die Welleneinrichtung insbesondere als eine Lenkwelle ausgebildet oder umfasst wenigstens eine solche. Insbesondere ist die Lenkwelle drehbar an der Aufnahmestruktur gelagert. Insbesondere ist die Lenkeinheit dann drehfest mit der Lenkwelle verbunden. Insbesondere ist die Aufnahmestruktur an einer Haltestruktur des Fahrzeugs befestigt. Möglich ist aber auch, dass die Lenkwelle feststehend (im Prinzip einer Achse) an einer Haltestruktur des Fahrzeugs befestigt ist. Dann ist die Aufnahmestruktur vorzugsweise an der Lenkwelle drehbar gelagert. Insbesondere ist die Lenkeinheit dann drehfest mit der Aufnahmestruktur verbunden. Insbesondere ist die Lenkeinheit dann relativ zur Lenkwelle drehbar.

Es ist möglich und vorteilhaft, dass die Aufnahmestruktur direkt an dem Bedienelement und insbesondere an der Lenkeinheit (drehfest) montiert ist. Möglich und vorteilhaft ist auch, dass die Welleneinrichtung direkt (drehfest) an dem Bedienelement, insbesondere an der Lenkeinheit, montiert ist und dabei eine Länge aufweist, welche nicht größer als das 2,5-fache einer axialen Ausdehnung der Aufnahmestruktur und/oder Aktoreinrichtung ist. Mit anderen Worten, bei der Erfindung kann die Aufnahmestruktur im Wesentlichen in unmittelbarer Nachbarschaft zur Lenkeinheit angeordnet werden und eine Lenksäule als solche ist gar nicht notwendig.

Insbesondere ist die bestimmungsgemäß im Fahrzeug montierte Aufnahmestruktur (oder ihre Verkleidung) von den Fahrzeugsitzplätzen aus sichtbar. Insbesondere ist die Aufnahmestruktur in einem Gehäuse der Lenkeinheit untergebracht ist oder Teil eines solchen Gehäuses. Insbesondere sind die Aufnahmestruktur und die Lenkeinheit außerhalb eines Armaturenbretts angeordnet. Möglich ist aber auch, dass die Aufnahmestruktur mittels einer üblichen (längeren) Lenkwelle bzw. Lenksäule mit dem Bedienelement bzw. der Lenkeinheit verbunden ist.

Die Aufnahmestruktur und die Lenkeinheit können einen Vormontage-Zusammenbau bilden, welcher als eine Einheit gehandhabt werden kann. Insbesondere können die Aufnahmestruktur und die Lenkeinheit als eine Einheit in ein Fahrzeug eingebaut werden.

Es kann vorgesehen sein, dass das Bedienelement, insbesondere die Lenkeinheit, linear verschiebbar an einer feststehenden Haltestruktur und beispielsweise einer Karosseriestruktur befestigt ist. Dann ist die Aufnahmestruktur insbesondere (nur) zusammen mit dem Bedienelement, insbesondere der Lenkeinheit, linear verschiebbar.

Insbesondere ist die Vorrichtung, insbesondere die Bedieneinrichtung, so ausgebildet, dass ein Maximalstrom der Bremseinrichtung im Betrieb weniger als 20 A und vorzugsweise weniger als 15 A und besonders bevorzugt weniger als 10 A oder auch weniger als 5 A beträgt. Ein solcher Maximalstrom ist insbesondere auf eine Versorgungsspannung von 12 V zur Erzeugung von einem Bremsmoment von 35 Newtonmeter bezogen.

Es ist möglich, dass die Antriebseinrichtung als ein elektrischer Generator betreibbar ist. Insbesondere wird der Generator durch die Bewegung des Übertragungselements bzw. Bedienelements angetrieben. Insbesondere wird die Bewegung durch den Generatorbetrieb (zusätzlich zur Bremseinrichtung) gebremst. So kann die Bremswirkung bei Bedarf gezielt erhöht werden. Insbesondere wird die zusätzliche Bremswirkung bei der Ansteuerung der Bremseinrichtung berücksichtigt. Die im Generatorbetrieb generierte elektrische Energie ist insbesondere zur Versorgung der Bremseinrichtung und/oder der Antriebseinrichtung einsetzbar. Die generierte elektrische Energie kann der Bremseinrichtung direkt zur Verfügung gestellt werden. Zusätzlich oder alternativ kann ein Energiespeicher und z. B. ein Akku vorgesehen sein.

Die hier vorgestellte Bedieneinrichtung kann zur Lenkung oder auch zur Bedienung anderer Funktionen eines Fahrzeugs (z. B. Drehsteller mit aktiver Verstellung durch den Motor) oder anderer Maschinen bzw. Geräte (Medizingeräte, Computer, Gamecontroller) ausgebildet sein.

Es ist möglich und vorteilhaft, dass die Vorrichtung bzw. Bedieneinrichtung als ein Joystick ausgebildet ist. Vorzugsweise ist das Übertragungselement bzw. Bedienelement dann als ein (schwenkbarer) Bedienhebel ausgebildet. Insbesondere ist der Bedienhebel um wenigstens zwei Achsen (X-Achse, Y-Achse) schwenkbar. Insbesondere ist für jede Schwenkachse jeweils wenigstens eine Aktoreinrichtung vorgesehen. Insbesondere ist ein Axialflussmotor vorgesehen.

Die Bedieneinrichtung, insbesondere der Joystick, kann eine Lenkvorgabeeinrichtung zum Vorgeben eines Lenkbefehls nach dem Steer-by-Wire-Konzept bereitstellen (z. B. an Stelle eines Lenkrads). Die Bedieneinrichtung, insbesondere der Joystick, kann zum Bedienen eines Simulators, eines Computers, eines Fahrzeugs und/oder einer Maschine, wie z. B. ein Kran oder Bagger oder ein Anbaugerät eines (landwirtschaftlichen) Fahrzeugs, vorgesehen sein. Im Rahmen der vorliegenden Erfindung wird unter einem Fahrzeug auch ein Wasserfahrzeug oder ein Flugzeug oder eine (ferngesteuerte) Drohne verstanden. Die Bedieneinrichtung, insbesondere der Joystick, kann als Gashebel und/oder Bremshebel eines Fahrzeugs dienen.

Die Vorrichtung kann in einer vorteilhaften Ausführung als eine Türeinrichtung ausgebildet sein. Die Türeinrichtung umfasst insbesondere wenigstens eine Türtragstruktur und wenigstens eine schwenkbar an der Türtragstruktur aufgenommene Türeinheit. Mittels der Bremseinrichtung kann die Bewegung der Türeinheit beim Öffnen und/oder Schließen gezielt gedämpft werden. Mittels der Antriebseinrichtung kann die Türeinheit zum Öffnen und/oder Schließen aktiv bewegt werden. Durch die gemeinsame Aufnahmestruktur der vorliegenden Erfindung ist die Aktoreinrichtung besonders kompakt und kann daher von außen nicht sichtbar im Türstock bzw. Türrahmen untergebracht werden.

Das Übertragungselement ist insbesondere mit der Türtragstruktur und/oder der Türeinheit wirkverbunden, sodass es durch das Bewegen der Türeinheit bewegbar ist und/oder sodass es die Türeinheit wenigstens abschnittsweise aktiv bewegen kann. Die Bremseinrichtung dient insbesondere zur Erzeugung eines Bremsmoments, welches auf das Übertragungselement und somit auch auf die Türeinheit wirkt. Die Antriebseinrichtung dient insbesondere zur Erzeugung eines Drehmoments, welches auf das Übertragungselement und somit auch auf die Türeinheit wirkt. Die Türeinrichtung kann als eine Gebäudetür oder eine Fahrzeugtür ausgebildet sein. Die Anmelderin behält sich vor, eine als Türeinrichtung ausgebildete Vorrichtung zu beanspruchen.

Die hier vorgestellte Vorrichtung kann auch als eine andere Art von Vorrichtung und zum Beispiel als ein Brake-by-Wire-Aktor, Sitzverstellung und/oder -arretierung ausgebildet sein.

Die Vorrichtung kann in einer vorteilhaften Ausführung als eine Körperunterstützungsmechanik zur mechanischen Unterstützung eines menschlichen oder tierischen Körpers ausgebildet sein. Die Körperunterstützungsmechanik ist insbesondere eine Prothese und/oder eine Exoskeletteinrichtung. Im Rahmen der vorliegenden Erfindung wird unter einer Prothese insbesondere auch eine Orthese verstanden. Durch die gemeinsame Aufnahmestruktur der vorliegenden Erfindung fällt die Körperunterstützungsmechanik besonders kompakt und leicht aus, sodass der Tragekomfort verbessert wird.

Das Übertragungselement ist insbesondere mit dem menschlichen oder tierischen Körper so wirkverbunden, dass es durch den Körper mittels Muskelkraft bewegbar ist und/oder dass es den Körper wenigstens abschnittsweise aktiv bewegen kann. Die Bremseinrichtung dient insbesondere zur Erzeugung eines Bremsmoments, welches auf das Übertragungselement und somit auch auf den Körper wirkt. Die Antriebseinrichtung dient insbesondere zur Erzeugung eines Drehmoments, welches auf das Übertragungselement und somit auch auf den Körper wirkt. Beispielsweise kann die Prothese ein künstliches Körpergelenk (Knie-, Hüft-, Fuß-, Finger-, Ellenbogen-, Schultergelenk etc.) und/oder Körperglied (Arm, Bein, Fuß, Finger etc.) sein bzw. teilweise ersetzen. Die Exoskeletteinrichtung dient insbesondere zur aktiven Unterstützung der Muskelkraft des Körpers und zum Bremsen bzw. Dämpfen einer Bewegung des Körpers. Die Exoskeletteinrichtung kann z. B. als industrielle Montagehilfe eingesetzt werden. Die Körperunterstützungsmechanik umfasst vorzugsweise wenigstens eine Gelenkeinrichtung mit wenigstens zwei Gelenkeinheiten. Insbesondere ist das Übertragungselement mit wenigstens einer der Gelenkeinheiten mechanisch gekoppelt. Insbesondere ist für jede Gelenkeinrichtung jeweils wenigstens eine Aktoreinrichtung vorgesehen. Die Anmelderin behält sich vor, eine als Körperunterstützungsmechanik ausgebildete Vorrichtung zu beanspruchen.

Die Aufnahmestruktur kann mehrteilig oder auch einteilig ausgebildet sein. Insbesondere umgibt die Aufnahmestruktur die Antriebseinrichtung und/oder die Bremseinrichtung und vorzugsweise auch wenigstens abschnittsweise (zu einem überwiegenden Teil) die Welleneinrichtung. Die Antriebseinrichtung und/oder die Bremseinrichtung sind insbesondere jeweils an der Aufnahmestruktur in Bezug auf das Drehmoment bzw. Bremsmoment, welche sie im Betrieb bereitstellen, abgestützt.

Insbesondere umfasst die Vorrichtung wenigstens eine Haltestruktur. Insbesondere kann das Antriebsmoment bzw. Bremsmoment an der Haltestruktur abgestützt werden. Die Haltestruktur kann Teil einer Konsole oder einer Fahrzeugkarosserie sein oder an dieser drehfest befestigbar sein (insbesondere im Rahmen einer Ausführung als Bedieneinrichtung). Die Haltestruktur kann an einem menschlichen oder tierischen Körper drehfest befestigt sein (insbesondere im Rahmen einer Ausführung als Körperunterstützungsmechanik). Die Haltestruktur kann auch an einem Gebäude drehfest befestigt sein (insbesondere im Rahmen einer Ausführung als Türeinrichtung).

Die Vorrichtung kann wenigstens eine Kontaktierungseinrichtung umfassen, welche zur elektrischen Anbindung einer am Übertragungselement angeordneten Komponente mit einer außerhalb des Übertragungselements angeordneten Komponente dient. Die Kontaktierungseinrichtung kann beispielsweise eine Wickelfedereinrichtung mit wenigstens einer Wickelfeder und/oder eine Schleifkontakteinrichtung mit wenigstens einem Schleifkontakt umfassen. Insbesondere ermöglicht die Kontaktierungseinrichtung eine Leistungs- und/oder Signalübertragung, während sich das Übertragungselement bewegt und vorzugsweise dreht. Besonders vorteilhaft ist die Kontaktierungseinrichtung, wenn die Vorrichtung als eine Bedieneinrichtung bzw. Lenkvorgabeeinrichtung und das Übertragungselement als ein Bedienelement bzw. als Lenkeinheit ausgebildet ist. Es ist möglich, dass die Kontaktierungseinrichtung auch zur elektrischen Anbindung der Aktoreinrichtung und/oder der Sensoreinrichtung an eine Einrichtung zur Energieversorgung und/oder Ansteuerung dient.

Die drehfeste Verbindung ist insbesondere kraftschlüssig und/oder formschlüssig und/oder stoffschlüssig ausgebildet. Die einstückige Verbindung ist insbesondere stoffschlüssig und vorzugsweise werkstoffeinstückig bzw. aus einem durchgehenden Werkstoff ausgebildet. Möglich ist aber auch eine stoffschlüssige Verbindung aus verschiedenen Werkstoffen, z. B. eine Schweiß- oder Klebeverbindung.

Die Spuleneinrichtung der Bremseinrichtung und/oder die Motorspule der Antriebseinrichtung sind insbesondere an dem feststehenden Bauteil befestigt. Das feststehende Bauteil ist dabei entweder die Aufnahmestruktur oder die Welleneinrichtung. Möglich ist aber auch, dass die Spuleneinrichtung und/oder die Motorspule an dem sich relativ zum feststehenden Bauteil drehenden Bauteil befestigt sind. Dann sind beispielsweise Wickelfedern und/oder Schleifkontakte oder dergleichen zur Kontaktierung vorgesehen.

In allen Ausgestaltungen ist es bevorzugt, dass das magnetorheologische Medium magnetorheologische Partikel und Gas als Füllmedium umfasst. Insbesondere sind die magnetorheologischen Partikel in Luft aufgenommen. Insbesondere ist das magnetorheologische Medium als ein magnetisierbares Pulver ausgebildet. Möglich ist auch, dass das magnetorheologische Medium magnetorheologische Partikel und eine Trägerflüssigkeit, wie z. B. Öl, Wasser oder Alkohol oder dergleichen, umfasst. Das Medium kann flüssige und/oder feste Additive (z. B. eine Graphitbeigabe, Molybdänverbindungen, etc.) umfassen.

Es ist besonders bevorzugt, dass die magnetorheologischen Partikel (jeweils) überwiegend aus Carbonyleisenpulver oder aus dessen Derivaten bestehen. Möglich sind auch andere magnetorheologisch ansprechbare Partikel. Die magnetorheologischen Partikel können Beschichtungen zum Schutz vor Abrieb und/oder Korrosion und/oder zusätzliche Bestandteile aufweisen, um die magnetorheologischen Partikel im Betrieb beständiger, abriebfester und/oder gleitfähiger zu gestalten.

Die maximal erzielbare Geschwindigkeit mit der die Einlenkung der Räder eines Fahrzeugs durch den Road Wheel Actuator (=RWA, Straßenradaktuator) erfolgt, ist abhängig von verschiedenen äußeren Einflüssen, z.B. der Temperatur von Stellmotoren des RWA und/oder der Außentemperatur, einer erhöhten Reibung der Straßenräder, beispielsweise durch zu wenig Reifendruck, Materialverschleiß, etc. Damit die Lenkvorgabeeinrichtung synchron mit den Stellmotoren des RWA bewegt wird, muss die Bewegbarkeit der Lenkvorgabeeinrichtung mittels des FFA gegebenenfalls stärker gebremst werden, um die Bewegbarkeit der Lenkvorgabeeinrichtung an die erzielbare Geschwindigkeit des RWA anzupassen. Ist zudem die Innentemperatur des Fahrzeugs, beispielsweise aufgrund von Sonneneinstrahlung während des Parkens, hoch, so wirkt sich dies auf die Leistungsfähigkeit von Elektromotoren aus, da das mittels Elektromotoren aufbringbare Drehmoment stark temperaturabhängig ist. FFAs mit magnetorheologischen Bremsen können auch bei hohen Temperaturen zuverlässig ein hohes Bremsmoment erzeugen und sind dadurch besser für den Einsatz bei hohen Temperaturen geeignet.

Weitere Vorteile und Merkmale der vorliegenden Erfindung ergeben sich aus den Ausführungsbeispielen, welche im Folgenden mit Bezug auf die beiliegenden Figuren erläutert werden.

Darin zeigen:
- Fig. 1: eine rein schematische Darstellung einer erfindungsgemäßen Vorrichtung in einer perspektivischen Ansicht;
- Fig. 2: eine rein schematische Darstellung der Vorrichtung in einer geschnittenen Seitenansicht;
- Fig. 3: eine rein schematische Darstellung der Vorrichtung in einer geschnittenen Seitenansicht;
- Fig. 4: eine rein schematische Darstellung einer Variante der Vorrichtung in einer geschnittenen Seitenansicht;
- Fig. 5-6: stark schematisierte Darstellungen jeweils einer Vorrichtung in einer geschnittenen Seitenansicht und ihrer Verschaltung;
- Fig. 7: eine rein schematische Darstellung einer Vorrichtung in einer Seitenansicht;
- Fig. 8: eine rein schematische Darstellung einer als Körperunterstützungsmechanik ausgebildeten Vorrichtung;
- Fig. 9: eine rein schematische Darstellung einer als Türeinrichtung ausgebildeten Vorrichtung; und
- Fig. 10: eine rein schematische Darstellung einer als Türeinrichtung ausgebildeten Vorrichtung.

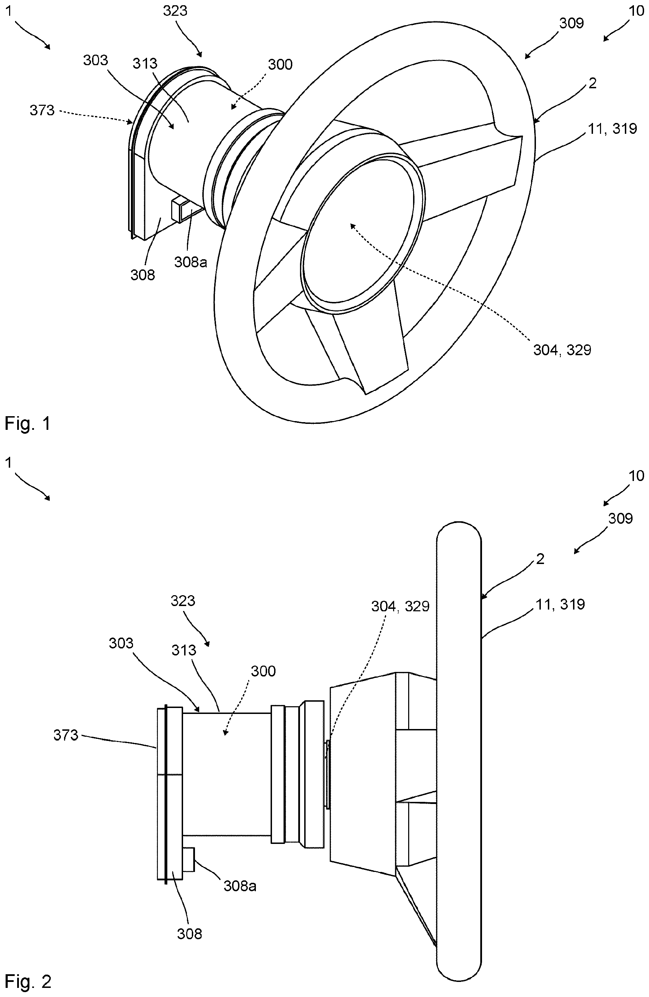

Die Figuren 1 bis 3 zeigen eine erfindungsgemäße Vorrichtung 1 mit einer Aktoreinrichtung 300 zur gezielten Beeinflussung der Bewegbarkeit eines Übertragungselements 2. Die Aktoreinrichtung 300 umfasst eine Antriebseinrichtung 302 mit einer ersten und einer zweiten Antriebskomponente 312, 322 sowie eine Bremseinrichtung mit einer ersten und einer zweiten Bremskomponente 311, 321. Die Dimensionierungen der Bauteile und insbesondere die Wandstärken sind hier und auch in den anderen Figuren schematisiert dargestellt, sodass eine besonders übersichtliche und verständliche Darstellung möglich ist.

Damit kann das Übertragungselement 2 aktiv bewegt und gezielt gebremst sowie mit haptisch wahrnehmbaren Rückmeldungen beaufschlagt werden. Die Bremseinrichtung 301 und die Antriebseinrichtung 302 sind axial benachbart zueinander in einer gemeinsamen Aufnahmestruktur 303 angeordnet, welche hier beispielhaft als eine Gehäuseeinrichtung 313 ausgebildet ist.

Die Antriebseinrichtung 302 und die Bremseinrichtung 301 sind hier axial hintereinander auf einer Welleneinrichtung 304 angeordnet. Die Welleneinrichtung 304 ist hier drehfest mit der ersten Antriebskomponente 312 und der ersten Bremskomponente 311 verbunden. Die zweite Antriebskomponente 322 und die zweite Bremskomponente 321 sind drehfest mit der Aufnahmestruktur 303 verbunden.

Die Welleneinrichtung 304 ist hier mittels einer Lagereinrichtung 305 mit nur zwei Lagerstellen 315, 325 drehbar an der Aufnahmestruktur 303 gelagert. Die Lagerstellen 315, 325 sind hier beispielsweise als Wälzlager oder Gleitlager ausgebildet. Die Aufnahmestruktur 303 umfasst hier zwei Tragwände 603, an denen die Lagerstellen 315, 325 der Lagereinrichtung 305 für die Welleneinrichtung 304 abgestützt sind.

Die Bremseinrichtung 301 und die Antriebseinrichtung 302 bilden hier eine Aktoranordnung 340, welche zwischen den zwei Lagerstellen 315, 325 angeordnet ist. Die Tragwände 603 bilden dabei einen nach axial außen abgeschlossenen Gehäuseraum 605. Zudem stützen die Tragwände 603 eine Basiswand 604 der Aufnahmestruktur 303 an den Lagerstellen 315, 325 ab. Dadurch, dass die Lagerstellen 315, 325 auf gegenüberliegenden Seiten der Aktoranordnung sind, können die Bremseinrichtung und die Antriebseinrichtung besonders eng beieinander angeordnet werden.

Die Antriebseinrichtung 302 und die Bremseinrichtung 301 wirken hier ohne ein dazwischengeschaltetes Getriebe direkt auf die Welleneinrichtung 304 ein. Auch die Welleneinrichtung 304 ist ohne ein dazwischengeschaltetes Getriebe direkt mit dem Bedienelement 11 verbunden.

Durch die gemeinsame Aufnahmestruktur 303 sind die Antriebseinrichtung 302 und die Bremseinrichtung 301 hier zu einem Vormontage-Zusammenbau 323 verbunden. Diese kann z. B. während der Montage eines Fahrzeugs als eine Einheit gehandhabt werden. Für eine besonders unaufwendige Montage verfügt die Aufnahmestruktur 303 beispielsweise über einen hier nicht sichtbaren Adapter 373 zur Anbindung an die Haltestruktur des Fahrzeugs. Durch die Befestigung an der Haltestruktur des Fahrzeugs bietet die Aufnahmestruktur 303 eine Drehmomentabstützung 310 für die Antriebseinrichtung 302 und die Bremseinrichtung 301.

Die hier gezeigte Vorrichtung 1 kann z B. als eine Bedieneinrichtung 10 ausgebildet sein. Das Übertragungselement 2 ist dann ein Bedienelement 11. Beispielsweise ist die Bedieneinrichtung 10 als eine Lenkvorgabeeinrichtung 309 zum Vorgeben eines Lenkbefehls nach dem Steer-by-Wire-Konzept ausgebildet. Dazu kann das Bedienelement 11 als eine Lenkeinheit 319 und beispielsweise als ein Lenkrad ausgebildet sein. Die Welleneinrichtung 304 ist dann als eine Lenkwelle 329 ausgebildet. Über einen Zapfen oder dergleichen kann die Lenkwelle 329 mit der Lenkeinheit 319 drehfest gekoppelt werden.

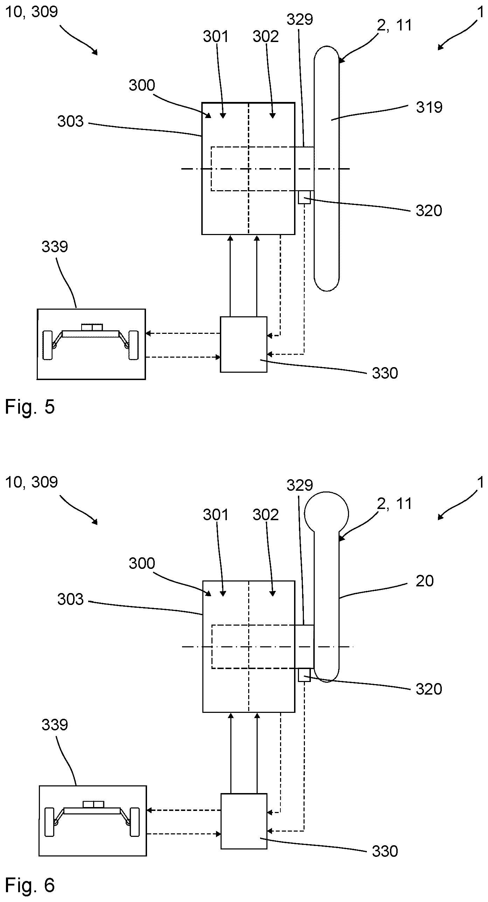

Die Funktionsweise der Lenkvorgabeeinrichtung 109 wird mit Bezug zu den Figuren 5 und 6 näher beschrieben. Die Bedieneinrichtung 10 kann aber auch als eine andere Art von Bedieneinrichtung 10 ausgebildet sein. Zum Beispiel ist das Bedienelement 11 dann ein Drehknopf oder dergleichen.

Die Antriebseinrichtung 302 umfasst hier einen als Axialflussmotor 332a ausgebildeten Elektromotor 332. Dazu weist die zweite (feststehende) Antriebskomponente 322 z. B. mehrere Kernteile auf, an denen jeweils eine Motorspule aufgewickelt ist. Die erste (drehbare) Antriebskomponente 312 umfasst z. B. einen als Scheibenteil ausgebildeten Rotor. An dem Scheibenteil sind dann Magnete angeordnet.

Zwischen den Bremskomponenten 311, 321 verläuft ein umlaufender (Wirk-)Spalt 331, in welchem ein magnetorheologische Medium 331d angeordnet ist. Mit einer elektrischen Spuleneinrichtung 361 kann ein einstellbares Magnetfeld erzeugt werden, welches das Medium 331d so beeinflusst, dass die gewünschte Bremswirkung erzeugt wird. Das Magnetfeld der Spuleneinrichtung 361 verläuft hier durch einen Magnetkreis, welcher durch die erste und zweite Bremskomponente 311, 321 bereitgestellt wird.

Die Abdichtung des Spalts 331 erfolgt mittels einer Dichtungseinrichtung 307, welche hier beispielhaft zwei berührende Dichteinheiten 367, 387 und eine berührungslose Dichteinheit 377 umfasst. Die äußere Tragwand 603 stellt einen Dichtungsträgerabschnitt 613 bereit, an welchem die Dichteinheit 367 befestigt ist, sodass sie berührend an der ersten Bremskomponente 311 anliegt. An dem Dichtungsträgerabschnitt 613 ist zudem die Dichteinheit 377 angeordnet, welche hier beispielsweise als eine Magnetdichtung ausgebildet ist. Dadurch wird eine berührungslose Abdichtung zu der Welleneinrichtung 304 erreicht.

Die Dichteinheit 387 ist an einer magnetisch nicht leitfähigen Dichtungstragscheibe 615 angeordnet. Die Dichtungstragscheibe 615 ist hier an der Aufnahmestruktur 303 befestigt. Die Dichteinheiten 367, 387 sind hier beispielsweise als Lippendichtungen ausgebildet. Um den Verschleiß zu reduzieren, ist an der ersten Bremskomponente 311 im Bereich der Dichteinheiten 367, 387 jeweils eine Anlaufscheibe 653 angeordnet. Der Dichtungsträgerabschnitt 613 stellt hier eine Trennwand 643 bereit, welche die Bremskomponente 311 von der Lagerstelle 315 räumlich abtrennt.

Die Spuleneinrichtung 361 befindet sich zwischen zwei Spulenträgerwänden 606. Dabei wird eine Spulenträgerwand 606 durch die erste Bremskomponente 311 bereitgestellt. Die gegenüberliegende Spulenträgerwand 606 wird durch die zweite Bremskomponente 321 bereitgestellt. So kann die Spuleneinrichtung 361 besonders einfach und zügig montiert werden.

Die zweite Bremskomponente 321 wird hier durch einen magnetisch leitfähigen Abschnitt 604a der Basiswand 604 bereitgestellt. Dieser Abschnitt 604a ist mit einem magnetisch nicht leitfähigen Abschnitt 604b verbunden, sodass die Abschnitte 604a, 604b gemeinsam die Basiswand 604 bereitstellen. Hier wird auch die Spulenträgerwand 606 durch den Abschnitt 604a gebildet. Die Spulenträgerwände 606 und/oder die ihnen jeweils gegenüberliegenden Abschnitte können mit einer umlaufenden unrunden (Stern-) Kontur ausgestattet sein. Dadurch ergibt sich eine veränderliche Spalthöhe, was sich sehr positiv auf das Bremsmoment auswirkt.

Die Bremskomponente 311 weist hier eine veränderliche axiale Breite auf. Dadurch wird im Bereich der Spuleneinrichtung 361 ein vorteilhaft vergrößerter Radius bereitgestellt, wodurch höhere Bremsmomente möglich sind. Dabei weist die Tragwand 603 eine Innenkontur 623 auf, welche der Änderung der axialen Breite der Bremskomponente 311 folgt. Dazu weist die Innenkontur 623 hier einen abgewinkelten Verlauf auf. Dadurch wird hier nur eine geringe Menge an Medium 331d benötigt.

Die der Bremseinrichtung 301 zugewandte Trennwand 603 weist hier einen nach axial außen ragenden Flanschabschnitt 633 auf, an welchem die Lagerstelle 315 befestigt ist. Dadurch kann die Lagerstelle 315 trotz der besonderen Innenkontur 623 möglichst weit außen angeordnet werden.

Die der Bremseinrichtung 301 zugewandte Tragwand 603 ist hier als ein Umformteil 625 ausgebildet. Auch die Abschnitte 604a, 604b der Basiswand 604 und/oder die Dichtungstragscheibe 615 können als Umformteile 625 ausgebildet sein.

Um die Drehbewegung der Lenkeinheit 319 erfassen zu können, ist eine Sensoreinrichtung 320 vorgesehen. Hier befindet sich die Sensoreirichtung 320 an einem axialen Ende der Welleneinrichtung 304, welches der Lenkeinheit 319 gegenüberliegt. Dadurch kann die Sensoreinrichtung 320 unkompliziert über den Anschluss 308 kontaktiert werden.

Die Vorrichtung 1 ist hier mit einer mechanischen Drehbegrenzungseinrichtung 607 ausgestattet. Dabei wird mittels einer Endanschlageinheit 617 der Drehwinkel begrenzt. Beispielsweise greift die Endanschlageinheit 617 zum Begrenzen des Drehwinkels in entsprechende Vorsprünge und/oder Vertiefungen ein, welche an der Tragwand 603 ausgebildet sind. Zusätzlich oder alternativ kann die Bewegbarkeit der Lenkeinheit 319 auch durch die Bremseinrichtung 301 blockiert bzw. freigegeben werden. Durch die hier gezeigte Bauweise kann die Bremseinrichtung 301 auch besonders hohe Bremsmomente bereitstellen. Dadurch kann die Lenkeinheit 319 so stark gebremst werden, dass sie z. B. als Ausstiegshilfe benutzt werden kann.

Die Vorrichtung 1 kann mit einer Störfallsicherung ausgestattet sein, welche das Übertragungselement 2 bei einem Störfall gezielt bremst, sodass beispielsweise die Lenkeinheit 319 weder blockiert ist noch widerstandslos bewegt werden kann. Die Störfallsicherung umfasst z. B. eine Permanentmagneteinrichtung, welche beispielsweise in der Bremskomponente 321 angeordnet ist.

Die Motorspulen und die Spuleneinrichtung 361 und bei Bedarf auch die Spuleneinrichtung der Störfallsicherung werden über einen elektrischen Anschluss 308 versorgt bzw. angesteuert. Dabei verläuft der elektrische Anschluss 308 mit seinen Leitungen hier über die Aufnahmestruktur 303. Der Vorteil ist, dass die Spulen einfach angeschlossen werden können, ohne dass Leitungen durch die Welleneinrichtung 304 geführt werden müssen. Bei einer feststehenden Welleneinrichtung 304 ist dies natürlich auch anders möglich.

Der Anschluss 308 weist hier eine der Lenkeinheit 319 zugewandte Zugangsöffnung 308a auf, beispielsweise in der Art einer Steckbuchse. Dadurch kann die korrekte elektrische Anbindung bei der Endmontage zuverlässig visuell überwacht werden. Der Anschluss 308 stellt hier einen Elektronikraum bereit, in welchem z. B. eine Leiterplatte zur Steuerung der Aktoreinrichtung und/oder für die Sensoreinrichtung 320 untergebracht werden können.

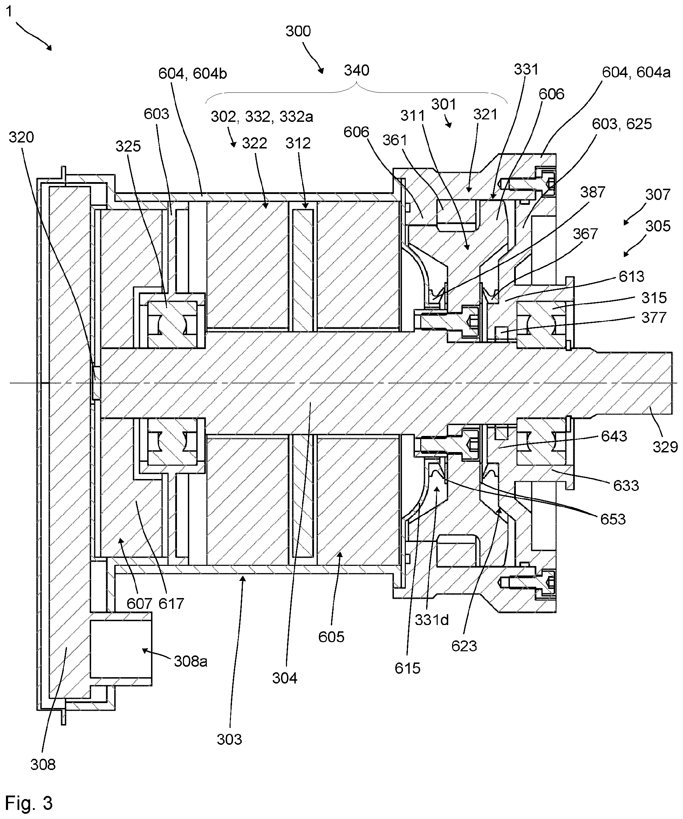

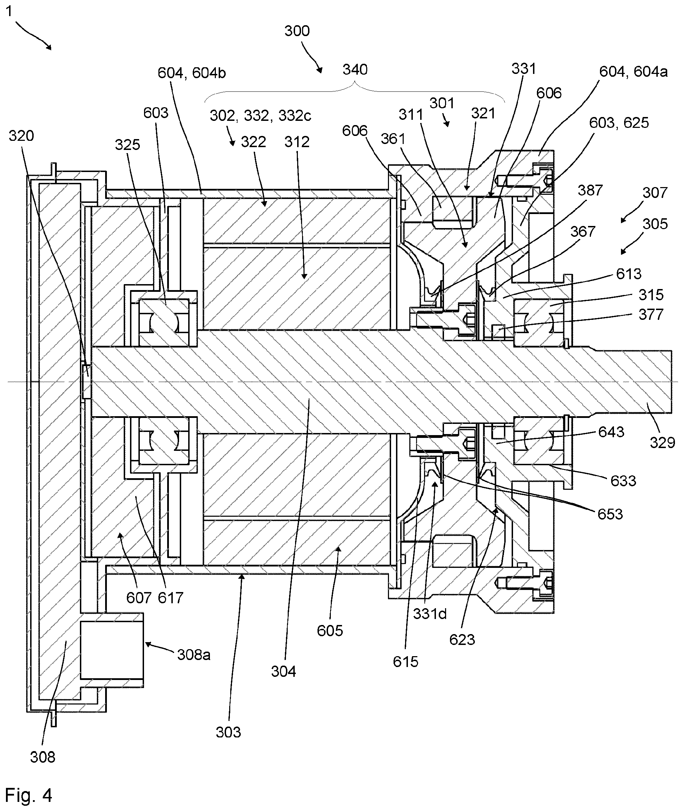

In der Figur 4 ist die Vorrichtung 1 der Figur 3 in einer Variante gezeigt, bei welcher anstelle des Axialflussmotors 332a ein Radialflussmotors 332c vorgesehen ist. Dazu sind die zweite (feststehende) Antriebskomponente 322 als Stator und die erste (drehbare) Antriebskomponente 312 als Rotor ausgebildet.

Die Figur 5 zeigt den prinzipiellen Aufbau eines Fahrzeugs mit einer als Lenkvorgabeeinrichtung 309 ausgebildeten Bedieneinrichtung 10. Dabei ist eine axiale Anordnung von Antriebseinrichtung 302 und Bremseinrichtung 301 vorgesehen.

Die Bedieneinrichtung 10 ist ohne eine mechanische Wirkverbindung und insbesondere rein elektrisch bzw. elektronisch mit einer Lenkungseinrichtung 339 des Fahrzeugs verbunden. Die Lenkungseinrichtung 339 kann die gelenkten Räder des Fahrzeugs verstellen und dadurch die mit der Lenkeinheit 319 ausgeführte Lenkbewegung in eine Fahrzeugbewegung umsetzen. Die Stellung bzw. die Bewegungen und/oder das Drehmoment und oder/die Drehzahl der Lenkeinheit 319 werden hier mit einer Sensoreinrichtung 320 erfasst. Beispielsweise ist ein Drehwinkelsensor oder ein Drehmomentsensor oder eine Kombination aus beidem vorgesehen.

Die Sensoreinrichtung 320 stellt ihre Informationen einer Steuereinrichtung 330 zur Verfügung. Zusätzlich oder alternativ können weitere Sensormittel in der Bremseinrichtung 301 und/oder in der Antriebseinrichtung 302 vorgesehen sein, welche ihre Informationen ebenfalls der Steuereinrichtung 330 zur Verfügung stellen.

Die Lenkungseinrichtung 339 empfängt die Soll-Vorgaben von der Steuereinrichtung 330. Zudem kann die Lenkungseinrichtung 339 Anforderungen an das Moment für die haptische Rückkopplung übermitteln. Die Steuereinrichtung 330 nimmt dann die Ansteuerung der Bremseinrichtung 301 und der Antriebseinrichtung 302 vor, damit an der Lenkeinheit 319 haptische Rückmeldungen wahrnehmbar sind, welche z. B. denen einer herkömmlichen mechanischen Lenkung entsprechen.

In der Figur 6 ist die Lenkvorgabeeinrichtung 309 in einer als Joystick 2 ausgebildeten Variante gezeigt. Auch die anderen hier beschriebenen Varianten der Vorrichtung 1 können als Joystick 20 ausgebildet sein. Der Joystick 20 ist in der gezeigten Variante als eindimensionaler Joystick 20 ausgebildet, der auch als Bedienhebel bezeichnet werden könnte. Es ist denkbar und möglich, einen mehrdimensionalen Joystick 20 mit mehr als einem Freiheitsgrad, z. B. zwei (Rotations-)Freiheitsgraden, vorzusehen. Dann ist den Freiheitsgraden insbesondere jeweils wenigstens eine Aktoreinrichtung 300 zur Ausübung von haptischen Rückmeldungen auf den Bedienhebel zugeordnet.

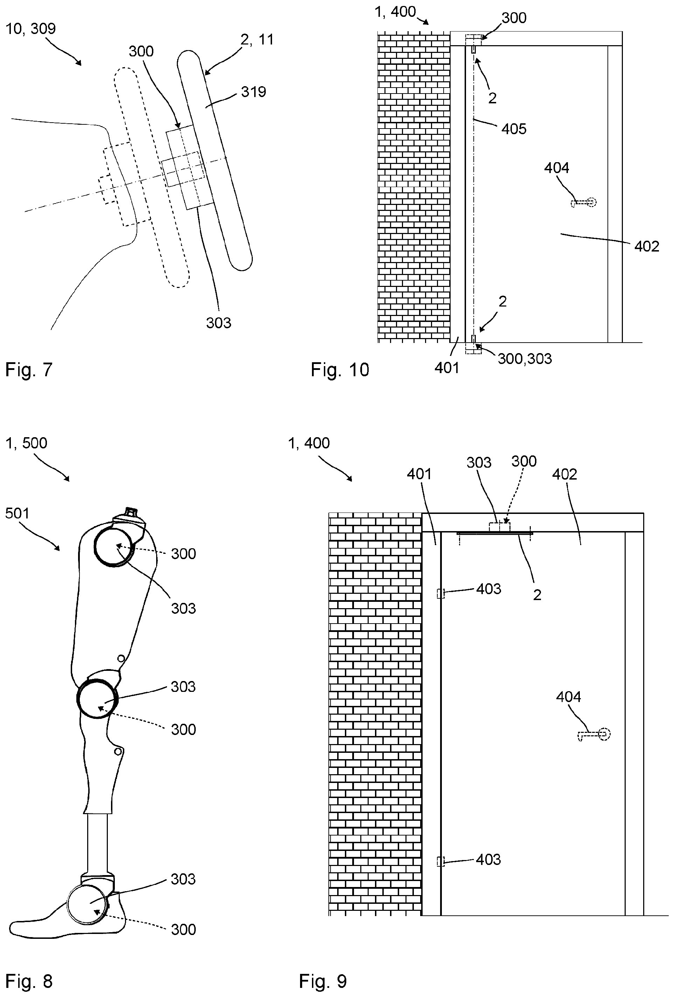

Die Figur 7 zeigt die Lenkvorgabeeinrichtung 309 mit einer linear verschiebbaren Lenkeinheit 319. Dabei werden die Aufnahmestruktur 303 und somit auch die darin untergebrachte Aktoreinrichtung 300 zusammen mit der Lenkeinheit 319 linear verschoben. Hier ist auch gut zu erkennen, dass die Aufnahmestruktur 303 und die Aktoreinrichtung 300 aufgrund der besonders kompakten Bauweise und ihres geringen Gewichts direkt an der Lenkeinheit 319 angeordnet werden können.

Im Stand der Technik wird der Force-Feedback-Aktuator üblicherweise an dem Ende der Lenksäule verbaut, welches dem Lenkrad gegenüberliegt (also dort, wo bei konventionellen Lenkeinheiten das Kardangelenk zu den Rädern ging). Bei der Erfindung kann die Aktoreinrichtung z. B. so nah beim Lenkrad angeordnet werden, dass die Aktoreinrichtung 300 bzw. Aufnahmestruktur 303 vom Innenraum des Fahrzeugs aus ersichtlich sind.

Hier ist die Aufnahmestruktur 303 drehfest mit der Lenkeinheit 319 verbunden. Bei einer Längsverstellung des Lenkrades bewegt sich die Aktoreinrichtung 300 mit dem Lenkrad mit (wie gestrichelt skizziert). Durch die Anordnung in Lenkradnähe kann auf eine Momentenübertragung über die gesamte Lenksäule, d.h. vom Lenkrad über diverse Schiebewellen zum Force Feedback Aktuator (wie beim Stand der Technik), verzichtet werden. Alternativ kann die Aktoreinrichtung 300 aber auch am gegenüberliegenden Ende einer üblichen Lenksäule angeordnet sein.

Die hier gezeigte Anordnung ist für alle Arten von Fahrzeugen und auch für Bedieneinrichtungen 10 für Simulationen/Gaming möglich. Sie eignet sich auch sehr gut für Fahrzeuge für zumindest teilautonomes Fahren. Denn dann sind oft größere axiale Verstellwege von mehr als 70 mm oder 100 mm und z. B. 250mm zum Wegfahren des Lenkrades gewünscht. Da die hier beschriebene Aktoreinrichtung 300 besonders geringe Ströme benötigt (z. B. 3 Ampere in Relation zum Stand der Technik mit 60 Ampere), sind auch keine Stromkabel mit großem Querschnitt nötig. Zudem ist hier die Wärmeabfuhr optimiert, da die Aktoreinrichtung 300 nicht im Inneren des Armaturenbrettes verbaut wird, sondern mit freiliegender Aufnahmestruktur 303 an der Lenkeinheit 319 ist.

Die Figur 8 zeigt eine als Körperunterstützungsmechanik 500 ausgebildete Vorrichtung 1. Hier handelt es sich beispielhaft um eine (Bein-) Prothese 501. Mit den in jeweils einer Aufnahmestruktur 303 untergebrachten Aktoreinrichtungen 300 kann die Bewegung der Prothese 501 aktiv ausgeführt oder unterstützt und auch gezielt gebremst werden. Dabei sind die jeweiligen (hier nicht sichtbaren) Übertragungselemente 2 sowohl mit dem Körper als auch mit der Aktoreinrichtung 300 wirkverbunden.

Die Figur 9 zeigt eine als Türeinrichtung 400 ausgebildete Vorrichtung 1. Die Türeinrichtung 400 umfasst hier eine am Gebäude befestigte Türtragstruktur 401 und eine mittels Scharnieren 403 schwenkbar an der Türtragstruktur 401 aufgenommene Türeinheit 402. Die Türeinheit 402 kann hier mit einer Türklinke 404 geöffnet werden, wobei die Aktoreinrichtung 300 zur Unterstützung dient. Möglich ist auch eine vollautomatische Türöffnung. Das Übertragungselement 2 ist mit der Türtragstruktur 401 und der Türeinheit 402 wirkverbunden. Vorzugsweise sind die Aufnahmestruktur 303 und die Aktoreinrichtung 300 von außen nicht sichtbar in der Türtragstruktur 401 angeordnet.

Die Antriebseinrichtung 302 kann hier einen Elektromotor 332 und/oder eine Kraftspeichereinrichtung 302a aufweisen. So können das Öffnen und auch das Schließen mittels des Elektromotors 332 erfolgen. Möglich ist auch, dass das Schließen der (geöffneten) Türeinheit 402 mit der Kraftspeichereinrichtung 302a erfolgt (Federrückstellung). Beide Bewegungsrichtungen (Öffnen und Schließen) können von der Bremseinrichtung 301 beeinflusst werden (z. B. kontrolliertes Schließen der Türeinheit, sodass diese nicht in der Ausgangsstellung anschlägt.

Bei der hier vorgestellten Erfindung liegen der Elektromotor 332 und die Bremseinrichtung 301 bevorzugt unmittelbar benachbart zueinander und sind vorzugsweise integriert aufgebaut. Die Auslegungsmomente für den Elektromotor 332 sind z. B. 0 - 5 Nm; für die Bremseinrichtung 301 z. B. 0 - 20 Nm oder 0 - 25 Nm oder 0 - 35 Nm.

Die Figur 10 zeigt eine alternative Ausgestaltung der als Türeinrichtung 400 ausgebildeten Vorrichtung 1. Die Türeinrichtung 400 umfasst hier eine am Gebäude befestigte Türtragstruktur 401 und eine mittels eines Übertragungselements 2 schwenkbar an der Türtragstruktur 401 aufgenommene Türeinheit 402. Die Türeinheit 402 kann hier mit einer optionalen Türklinke 404 geöffnet werden, wobei die Aktoreinrichtungen 300 zur Unterstützung dienen. Möglich ist auch hier eine vollautomatische Türöffnung.

Vorzugsweise sind die Aufnahmestruktur 303 und die Aktoreinrichtungen 300 von außen nicht sichtbar in der Türtragstruktur 401 bzw. im nicht gesondert bezeichneten Bodenaufbau angeordnet. Die Drehachse der Aktoreinrichtung 300 und die Drehachse 405 der Türeinheit sind im Ausführungsbeispiel koaxial angeordnet. Zwischen der Aktoreinrichtung und dem Übertragungselement 2 kann eine Getriebeeinrichtung angeordnet sein, wobei dann günstigerweise ein Getriebe vorgesehen ist, welches die Koaxialität der Drehachse der Türeinrichtung und der Aktoreinrichtung nicht beeinflusst, beispielsweise ein Planetengetriebe. Im Ausführungsbeispiel gemäß Figur 15 ist jedoch ein Direktantrieb vorgesehen, d.h. es wird auf ein Getriebe verzichtet.

In der Ausgestaltung gemäß Fig. 10 ist die Türeinrichtung aus der Grundstellung (=geschlossener Zustand) in einander gegenüberliegende Richtungen verschwenkbar, sodass ein Schwenkwinkel von mehr als 180° erreicht werden kann.

In Figur 10 ist sowohl im Bereich über der Türeinheit 402, d.h. im Türstock, als auch im Bereich unterhalb der Türeinheit 402 jeweils eine Aktoreinrichtung 300 eingezeichnet. D.h., die Türeinrichtung 400 weist hier zwei Aktoreinrichtungen 300 auf. Dies ist jedoch nicht zwingend. Es könnte auch nur eine der Aktoreinrichtungen 300 vorgesehen sein, beispielsweise nur im Türstock oder nur unterhalb der Türeinheit 402.

Bevorzugt ist die Antriebseinrichtung (der Elektromotor) in axialer Richtung kürzer als im Durchmesser. Insbesondere ist der Außendurchmesser der Antriebseinrichtung und/oder der Bremseinrichtung kleiner als 125 mm, bevorzugt kleiner als 110 mm und besonders bevorzugt kleiner als 100 mm.

Die Motorspulen 342 und/oder die Spuleneinrichtung 361 der Bremseinrichtung 301 können aus einem Spulendraht aus Kupfer, Aluminium o. ä. etc. gewickelt sein. Die Querschnittsform des Spulendrahts kann rund oder polygonal sein, z. B. rechteckförmig oder quadratisch oder sechseckig oder achteckig sein.

Bezogen auf 12 V Versorgungsspannung zur Erzeugung von 35 Nm Bremsmoment beträgt der Maximalstrom der Bremseinrichtung 301 im Betrieb günstigerweise weniger als 20 A (Ampere), bevorzugt weniger als 15 A, besonders bevorzugt weniger als 10 A, z. B. weniger als 5 A.

Der gesamte Strom zum Betreiben des Elektromotors 332 und der MR-Bremse bei einem gemeinsamen Betrieb des Motors und der Bremseinrichtung 301 beträgt bezogen auf eine Versorgungsspannung von 12 V günstigerweise weniger als 20 A, bevorzugt weniger als 15 A, besonders bevorzugt weniger als 10 A, z. B. weniger 5 A.

Durch eine geringere Stromaufnahme können die Bauteilkosten für die Elektronik, z. B. Leistungsfilterung, MOSFETs und Steuergeräte verringert werden. Beispielsweise kann die Ansteuerung zur Verstellung der Lenkradposition gegebenenfalls zur Ansteuerung der Aktoreinrichtung 300 verwendet werden.

Die Antriebseinrichtung 302 und die Bremseinrichtung 301 können vorzugsweise zeitgleich angesteuert werden, um ein Gesamtdrehmoment (aus Motordrehmoment und Bremsmoment der MR-Bremse) zu erzielen. Auch ein Überblenden von Motordrehmoment und Bremsmoment ist möglich (z. B. ein Verstärken des Motordrehmoments und ein Abschwächen des Bremsmoments und umgekehrt). Das maximale Gesamtdrehmoment des FFA kann durch maximale Bestromung des Motors und der MR-Bremse erzielt werden. Das maximale Gesamtmoment kann z. B. in einem Bereich von höher als 20 Nm liegen, z. B. 25 Nm oder 35 Nm oder mehr.

Beispielsweise benötigt die hier gezeigte Kombination aus magnetorheologischer Bremse und Axialflussmotor gegenüber einer herkömmlichen Steer-by-Wire-Lenkung ca. die Hälfte bis zu einem Drittel weniger an Bauvolumen, weniger als die Hälfte vom Gewicht und bis zum Faktor 10 weniger elektrische Leistung. Dadurch kann die Erfindung auch an besonderen bzw. schwierigen Positionen im Fahrzeug untergebracht werden. Zudem kann die Reichweite von Elektrofahrzeugen verbessert werden.

**Bezugszeichenliste:**

| | | | |
|---|---|---|---|
| 1 | Vorrichtung | 361 | Spuleneinrichtung |
| 2 | Übertragungselement | 367 | Dichteinheit |
| 10 | Bedieneinrichtung | 373 | Adapter |
| 11 | Bedienelement | 377 | Dichteinheit |
| 20 | Joystick | 387 | Dichteinheit |
| 300 | Aktoreinrichtung | 400 | Türeinrichtung |
| 301 | Bremseinrichtung | 401 | Türtragstruktur |
| 302 | Antriebseinrichtung | 402 | Türeinheit |
| 303 | Aufnahmestruktur | 403 | Scharnier |
| 304 | Welleneinrichtung | 404 | Türklinke |
| 305 | Lagereinrichtung | 405 | Drehachse Türeinheit |
| 307 | Dichtungseinrichtung | 500 | Körperunterstützungsmechanik |
| 308 | Anschluss | | |
| 308a | Zugangsöffnung | 501 | Prothese |
| 309 | Lenkvorgabeeinrichtung | 603 | Tragwand |
| 310 | Drehmomentabstützung | 604 | Basiswand |
| 311 | Bremskomponente | 604a | Abschnitt |
| 312 | Antriebskomponente | 604b | Abschnitt |
| 313 | Gehäuseeinrichtung | 605 | Gehäuseraum |
| 315 | Lagerstelle | 606 | Spulenträgerwand |
| 319 | Lenkeinheit | 607 | Drehbegrenzungseinrichtung |
| 320 | Sensoreinrichtung | | |
| 321 | Bremskomponente | 613 | Dichtungsträgerabschnitt |
| 322 | Antriebskomponente | 615 | Dichtungstragscheibe |
| 323 | Vormontage-Zusammenbau | 617 | Endanschlageinheit |
| 325 | Lagerstelle | 623 | Innenkontur |
| 329 | Lenkwelle | 625 | Umformteil |
| 331 | Spalt | 633 | Flanschabschnitt |
| 331d | Medium | 643 | Trennwand |
| 332 | Elektromotor | 653 | Anlaufscheibe |
| 332a | Axialflussmotor | | |
| 332c | Radialflussmotor | | |
| 339 | Lenkungseinrichtung | | |
| 340 | Aktoranordnung | | |

## Patentansprüche

1. Vorrichtung (1), insbesondere Lenkvorgabeeinrichtung (309), mit wenigstens einer Aktoreinrichtung (300) zur gezielten Beeinflussung der Bewegbarkeit eines Übertragungselements (2), wobei die Aktoreinrichtung (300) wenigstens eine magnetorheologische Bremseinrichtung (301) zur Erzeugung eines auf das Übertragungselement (2) wirkenden Bremsmoments umfasst, sodass die Bewegbarkeit des Übertragungselements (2) gezielt bremsbar ist und wobei die Aktoreinrichtung (300) wenigstens eine Antriebseinrichtung (302) zur Erzeugung eines auf das Übertragungselement (2) wirkenden Drehmoments umfasst, sodass das Übertragungselement (2) aktiv bewegbar ist, ,wobei die Bremseinrichtung (301) und die Antriebseinrichtung (302) axial benachbart zueinander innerhalb einer gemeinsamen Aufnahmestruktur (303) untergebracht sind und wobei die Aufnahmestruktur (303) mittels einer Lagereinrichtung (305) mit wenigstens zwei Lagerstellen (315, 325) drehbar auf einer Welleneinrichtung (304) gelagert ist,
**dadurch gekennzeichnet,**
**dass** die Bremseinrichtung (301) und die Antriebseinrichtung (302) zwischen den wenigstens zwei Lagerstellen (315, 325) angeordnet sind.

2. Vorrichtung (1) nach dem vorhergehenden Anspruch, wobei die Aufnahmestruktur (303) drehfest mit einer von wenigstens zwei relativ zueinander drehbaren Antriebskomponenten (312, 322) der Antriebseinrichtung (302) und einer von wenigstens zwei relativ zueinander drehbaren Bremskomponenten (311, 321) der Bremseinrichtung (301) verbunden ist und wobei die Welleneinrichtung (304) drehfest mit einer von wenigstens zwei relativ zueinander drehbaren Antriebskomponenten (312, 322) der Antriebseinrichtung (302) und einer von wenigstens zwei relativ zueinander drehbaren Bremskomponenten (311, 321) der Bremseinrichtung (301) verbunden ist und wobei die relativ zueinander drehbaren Antriebskomponenten (312, 322) und die relativ zueinander drehbaren Bremskomponenten (311, 321) zusammen eine Aktoranordnung (340) bilden, welche zwischen den wenigstens zwei Lagerstellen (315, 325) angeordnet ist.

3. Vorrichtung (1) nach einem der vorhergehenden Ansprüche, wobei die Lagerstellen (315, 325) nur außerhalb der Aktoranordnung (340) angeordnet sind und wobei die relativ zueinander drehbaren Antriebskomponenten (312, 322) und die relativ zueinander drehbaren Bremskomponenten (311, 321) ausschließlich mittels ihrer Befestigung an der Aufnahmestruktur (303) und der Welleneinrichtung (304) drehbar gelagert sind.

4. Vorrichtung (1) nach einem der vorhergehenden Ansprüche, wobei die Aufnahmestruktur (303) wenigstens zwei quer zur Längsachse der Welleneinrichtung (304) verlaufende Tragwände (603) umfasst und wobei die Lagerstellen (315, 325) an den Tragwänden (603) angebracht sind.

5. Vorrichtung (1) nach dem vorhergehenden Anspruch, wobei die Tragwände (603) einen Gehäuseraum (605), in welchem die Aktoranordnung (340) untergebracht ist, nach axial außen abschließen und/oder wobei die Tragwände (603) eine sich in Umfangsrichtung erstreckende Basiswand (604) der Aufnahmestruktur (303) an den Lagerstellen (315, 325) abstützen und wobei die drehfest mit der Aufnahmestruktur (303) verbundene Antriebskomponente (312, 322) und die drehfest mit der Aufnahmestruktur (303) verbundene Bremskomponente (311, 321) jeweils an der Basiswand (604) befestigt sind..

6. Vorrichtung (1) nach einem der beiden vorhergehenden Ansprüche, wobei eine der Bremseinrichtung (301) zugewandte Tragwand (603) einen Dichtungsträgerabschnitt (613) für wenigstens eine Dichteinheit (367, 377) zur Abdichtung eines wenigstens zum Teil mit einem magnetorheologischen Medium gefüllten Spalts (331) aufweist und wobei an dem Dichtungsträgerabschnitt (613) wenigstens eine als berührende Dichtung ausgebildete Dichteinheit (367) angeordnet ist, welche zu einer der Bremskomponenten (311, 321) abdichtet und/oder wobei an dem Dichtungsträgerabschnitt (613) wenigstens eine als berührungslose Dichtung, vorzugsweise Magnetdichtung, ausgebildete Dichteinheit (377) angeordnet ist, welche zu der Welleneinrichtung (304) abdichtet.

7. Vorrichtung (1) zumindest nach Anspruch 4, wobei eine der Bremseinrichtung (301) zugewandte Tragwand (603) eine Innenkontur (623) aufweist, welche einer Änderung der axialen Breite einer der Bremskomponenten (311, 321) folgt und wobei die Innenkontur (623) insbesondere einen abgewinkelten und/oder gekrümmten Verlauf aufweist.

8. Vorrichtung (1) zumindest nach Anspruch 4, wobei eine der Bremseinrichtung (301) zugewandte Tragwand (603) einen hervorstehenden Flanschabschnitt (633) aufweist, welcher die Lagerstelle (315, 325) in Umfangsrichtung wenigstens teilweise umschließt und/oder wobei eine der Bremseinrichtung (301) zugewandte Tragwand (603) eine Trennwand (643) aufweist, welche die Lagerstelle (315, 325) und eine der Bremskomponenten (311, 321) voneinander abgrenzt.

9. Vorrichtung (1) zumindest nach Anspruch 4, wobei eine der Bremseinrichtung (301) zugewandte Tragwand (603) nicht magnetisch leitfähig ausgebildet ist.

10. Vorrichtung (1) nach einem der vorhergehenden Ansprüche, wobei die Aufnahmestruktur (303), insbesondere die Basiswand (604), wenigstens abschnittweise magnetisch leitfähig ausgebildet ist und wenigstens einen Teil (604a) einer drehfest mit der Aufnahmestruktur (303) verbundenen Bremskomponente (311, 321) bereitstellt.

11. Vorrichtung (1) nach einem der vorhergehenden Ansprüche, wobei an der Aufnahmestruktur (303) wenigstens eine Dichtungstragscheibe (615) befestigt ist, welche sich von einer Basiswand (604) aus in Richtung der Welleneinrichtung (304) erstreckt und an welcher wenigstens eine Dichteinheit (387) angeordnet ist, welche zu einer der Bremskomponenten (311, 321) hin abdichtet.

12. Vorrichtung (1) nach einem der vorhergehenden Ansprüche, umfassend eine elektrische Spuleneinrichtung (361), welche zwischen wenigstens zwei magnetisch leitfähigen Spulenträgerwänden (606) aufgenommen ist, wobei die relativ zueinander drehbaren Bremskomponenten (311, 321) jeweils wenigstens eine Spulenträgerwand (606) bereitstellen.

13. Vorrichtung (1) nach einem der vorhergehenden Ansprüche, umfassend wenigstens eine Drehbegrenzungseinrichtung (607), welche dazu geeignet und ausgebildet ist, die Bewegbarkeit des Übertragungselements (2) mittels wenigstens einer ansteuerbaren Endanschlageinheit (617) mechanisch zu blockieren und freizugeben und wobei wenigstens eine Lagerstelle (315, 325) der wenigstens zwei Lagerstellen (315, 325) zwischen der Aktoranordnung (340) und der Drehbegrenzungseinrichtung (607) angeordnet ist.

14. Vorrichtung (1) nach einem der vorhergehenden Ansprüche, umfassend wenigstens eine Sensoreinrichtung (320) zur Erfassung einer charakteristischen Kenngröße für die Bewegung des Übertragungselements (2), wobei die Sensoreinrichtung (320) außerhalb eines zwischen den Tragwänden (603) aufgespannten Gehäuseraums (605) angeordnet ist.

15. Vorrichtung (1) nach einem der vorhergehenden Ansprüche, wobei ein elektrischer Anschluss (308) der Antriebseinrichtung (302) und/oder der Bremseinrichtung (301) über die Aufnahmestruktur (303) erfolgt und wobei der Anschluss (308) wenigstens eine in Richtung des Übertragungselements (2) ausgerichtete Zugangsöffnung (308a) aufweist und/oder wobei die Antriebseinrichtung (302) wenigstens einen Elektromotor (332) umfasst oder als ein solcher ausgebildet ist und wobei der Elektromotor (322) als ein Axialflussmotor (332a), insbesondere als ein Scheibenläufermotor, oder als ein Glockenanker-Motor ausgebildet ist oder wobei der Elektromotor (322) als ein Radialflussmotor (332c) ausgebildet ist.

## Claims

1. A device (1), in particular a steering input device (309), comprising at least one actuator arrangement (300) for selectively influencing the mobility of a transmission element (2), wherein the actuator arrangement (300) comprises at least one magnetorheological braking device (301) for generating a braking torque acting on the transmission element (2), such that the mobility of the transmission element (2) can be selectively braked, and wherein the actuator arrangement (300) comprises at least one drive arrangement (302) for generating a torque acting on the transmission element (2), such that the transmission element (2) can be actively moved, wherein the braking device (301) and the drive arrangement (302) are accommodated axially adjacent to one another within a common housing structure (303) and wherein the housing structure (303) is rotatably mounted on a shaft arrangement (304) by means of a bearing arrangement (305) having at least two bearing points (315, 325),
**characterized in that**
the braking device (301) and the drive arrangement (302) are arranged between the at least two bearing points (315, 325).

2. The device (1) according to the preceding claim, wherein the receiving structure (303) is connected in a rotationally fixed manner to one of at least two drive components (312, 322) of the drive unit (302) that are rotatable relative to each other and to one of at least two brake components (311, 321) of the braking unit (301) that are rotatable relative to each other, and wherein the shaft arrangement (304) is connected in a rotationally fixed manner to one of at least two drive components (312, 322) of the drive unit (302) that are rotatable relative to each other and to one of at least two brake components (311, 321) of the braking unit (301) that are rotatable relative to each other, and wherein the drive components (312, 322) rotatable relative to each other and the brake components (311, 321) rotatable relative to each other together form an actuator arrangement (340) which is arranged between the at least two bearing points (315, 325).

3. The device (1) according to any one of the preceding claims, wherein the bearing points (315, 325) are arranged only outside the actuator arrangement (340), and wherein the drive components (312, 322) rotatable relative to each other and the brake components (311, 321) rotatable relative to each other are rotatably supported exclusively by means of their attachment to the receiving structure (303) and the shaft arrangement (304).

4. The device (1) according to any of the preceding claims, wherein the receiving structure (303) comprises at least two supporting walls (603) extending transversely to the longitudinal axis of the shaft arrangement (304), and wherein the bearing points (315, 325) are attached to the supporting walls (603).

5. The device (1) according to the preceding claim, wherein the supporting walls (603) close off, in the axial outward direction, a housing space (605) in which the actuator arrangement (340) is accommodated, and/or wherein the supporting walls (603) support a base wall (604) of the receiving structure (303)-which extends in the circumferential direction-at the bearing points (315, 325), and wherein the drive component (312, 322) connected non-rotatably to the receiving structure (303) and the brake component (311, 321) connected non-rotatably to the receiving structure (303) are each fastened to the base wall (604).

6. The device (1) according to either of the two preceding claims, wherein a support wall (603) facing the braking device (301) comprises a seal carrier section (613) for at least one sealing unit (367, 377) for sealing a gap (331) filled at least partially with a magnetorheological medium, and wherein at least one sealing unit (367) configured as a contact seal is arranged on the seal carrier section (613) and seals against one of the brake components (311, 321), and/or wherein at least one sealing unit (377) configured as a non-contact seal, preferably a magnetic seal, is arranged on the seal carrier section (613) and seals against the shaft assembly (304).

7. The device (1) at least according to claim 4, wherein a support wall (603) facing the braking device (301) has an inner contour (623) that follows a change in the axial width of one of the brake components (311, 321), and wherein the inner contour (623) has, in particular, an angled and/or curved profile.

8. The device (1) at least according to claim 4, wherein a support wall (603) facing the braking device (301) has a projecting flange section (633) which at least partially encloses the bearing location (315, 325) in the circumferential direction, and/or wherein a support wall (603) facing the braking device (301) has a partition wall (643) which separates the bearing location (315, 325) and one of the brake components (311, 321) from one another.

9. The device (1) at least according to claim 4, wherein a support wall (603) facing the braking device (301) is configured to be non-magnetically conductive.

10. The device (1) according to any one of the preceding claims, wherein the receiving structure (303), in particular the base wall (604), is configured to be magnetically conductive at least in sections and provides at least a part (604a) of a brake component (311, 321) connected to the receiving structure (303) in a rotationally fixed manner.

11. The device (1) according to any one of the preceding claims, wherein at least one seal support disc (615) is fastened to the receiving structure (303), which extends from a base wall (604) towards the shaft arrangement (304) and on which at least one sealing unit (387) is arranged, which seals against one of the brake components (311, 321).

12. The device (1) according to any one of the preceding claims, comprising an electrical coil arrangement (361) accommodated between at least two magnetically conductive coil support walls (606), wherein the brake components (311, 321), which are rotatable relative to one another, each provide at least one coil support wall (606).

13. Device (1) according to any one of the preceding claims, comprising at least one rotation-limiting device (607) adapted and configured to mechanically block and release the mobility of the transmission element (2) by means of at least one controllable end-stop unit (617), and wherein at least one bearing point (315, 325) of the at least two bearing points (315, 325) is arranged between the actuator arrangement (340) and the rotation-limiting device (607).

14. The device (1) according to any one of the preceding claims, comprising at least one sensor device (320) for detecting a characteristic parameter of the movement of the transmission element (2), wherein the sensor device (320) is arranged outside a housing space (605) spanned between the supporting walls (603).

15. The device (1) according to any one of the preceding claims, wherein an electrical connection (308) of the drive device (302) and/or the braking device (301) is provided via the mounting structure (303), and wherein the connection (308) has at least one access opening (308a) oriented towards the transmission element (2), and/or wherein the drive device (302) comprises at least one electric motor (332) or is configured as such, and wherein the electric motor (322) is configured as an axial-flux motor (332a), in particular as a pancake motor, or as a coreless motor, or wherein the electric motor (322) is configured as a radial-flux motor (332c).

## Revendications

1. Dispositif (1), notamment dispositif de consigne de direction (309), doté d'au moins un système actionneur (300), destiné à influencer de manière ciblée la déplaçabilité d'un élément de transmission (2), le système actionneur (300) comprenant au moins un système de freinage (301) magnétorhéologique, pour générer un couple de freinage agissant sur l'élément de transmission (2), de sorte que la déplaçabilité de l'élément de transmission (2) puisse être freinée de manière ciblée et le système actionneur (300) comprenant au moins un système d'entraînement (302), pour générer un couple de rotation (2) agissant sur l'élément de transmission, de sorte que l'élément de transmission (2) soit activement déplaçable, le système de freinage (301) et le système d'entraînement (302) étant hébergés en étant voisins l'un de l'autre dans la direction axiale à l'intérieur d'une structure de logement (303) commune et la structure de logement (303) étant logée de manière rotative au moyen d'un système d'appui (305) doté d'au moins deux points d'appui (315, 325) sur un système d'arbre (304),
**caractérisé**
**en ce que** le système de freinage (301) et le système d'entraînement (302) sont placés entre les au moins deux points d'appui (315, 325).

2. Dispositif (1) selon la revendication précédente, la structure de logement (303) étant assemblée de manière solidaire en rotation avec l'un d'au moins deux composants d'entraînement (312, 322) rotatifs l'un par rapport à l'autre du système d'entraînement (302) et avec l'un d'au moins deux composants de freinage (311, 321) rotatifs l'un par rapport à l'autre du système de freinage (301) et le système d'arbre (304) étant assemblé de manière solidaire en rotation avec l'un d'au moins deux composants d'entraînement (312, 322) rotatifs l'un par rapport à l'autre du système d'entraînement (302) et l'un d'au moins deux composants de freinage (311, 321) rotatifs l'un par rapport à l'autre du système de freinage (301) et les composants d'entraînement (312, 322) rotatifs l'un par rapport à l'autre et les composants de freinage (311, 321) rotatifs l'un par rapport à l'autre constituant conjointement un ensemble actionneur (340), lequel est placé entre les au moins deux points d'appui (315, 325).

3. Dispositif (1) selon l'une quelconque des revendications précédentes, les points d'appui (315, 325) n'étant placés qu'à l'extérieur de l'ensemble actionneur (340) et les composants d'entraînement (312, 322) rotatifs l'un par rapport à l'autre et les composants de freinage (311, 321) rotatifs l'un par rapport à l'autre étant logés de manière rotative exclusivement au moyen de leur fixation sur la structure de logement (303) et le système d'arbre (304).

4. Dispositif (1) selon l'une quelconque des revendications précédentes, la structure de logement (303) comprenant au moins deux parois porteuses (603) s'écoulant à la transversale de l'axe longitudinal du système d'arbre (304) et les points d'appui (315, 325) étant montés sur les parois porteuses (603).

5. Dispositif (1) selon la revendication précédente, les parois porteuses (603) terminant vers l'extérieur en direction axiale un espace de carter (605), dans lequel est hébergé l'ensemble actionneur (340) et / ou les parois porteuses (603) soutenant une paroi de base (604) s'étendant dans la direction périphérique de la structure de logement (303) sur les points d'appui (315, 325) et le composant d'entraînement (312, 322) assemblé de manière solidaire en rotation avec la structure de logement (303) et le composant de freinage (311, 321) assemblé de manière solidaire en rotation avec la structure de logement (303) étant fixés chacun sur le paroi de base (604).

6. Dispositif (1) selon l'une quelconque des deux revendications précédentes, une paroi porteuse (603) qui fait face au système de freinage (301) comportant une section de support de joint (613) pour au moins une unité d'étanchéité (367, 377), destinée à assurer l'étanchéité d'une fente (331) remplie au moins en partie d'un agent magnétorhéologique et sur la section de support de joint (613) étant placée au moins une unité d'étanchéité (367) conçue sous la forme d'un joint de contact, lequel assure l'étanchéité vers l'une des composants de freinage (311, 321) et / ou sur la section de support de joint (613) étant placée au moins une unité d'étanchéité (377) conçue sous la forme d'un joint sans contact, de préférence d'un joint magnétique, lequel assure l'étanchéité vers le système d'arbre (304).

7. Dispositif (1) au moins selon la revendication 4, une paroi porteuse (603) qui fait face au système de freinage (301) comportant un contour interne (623), lequel suit une variation de la largeur axiale de l'un des composants de freinage (311, 321) et le contour interne (623) présentant notamment un trajet coudé et / ou curviligne.

8. Dispositif (1) au moins selon la revendication 4, une paroi porteuse (603) qui fait face au système de freinage (301) comportant une section de bride (633) saillante, laquelle entoure au moins partiellement le point d'appui (315, 325) dans la direction périphérique et / ou une paroi porteuse (603) qui fait face au système de freinage (301) comportant une paroi de séparation (643), laquelle délimite l'un de l'autre le point d'appui (315, 325) et l'un des composants de freinage (311, 321).

9. Dispositif (1) au moins selon la revendication 4, une paroi porteuse (603) qui fait face au système de freinage (301) étant conçue de manière à n'être pas magnétiquement conductrice.

10. Dispositif (1) selon l'une quelconque des revendications précédentes, la structure de logement (303), notamment la paroi de base (604), étant conçue de sorte à être au moins par section magnétiquement conductrice et mettant à disposition au moins une partie (604a) d'un composant de freinage (311, 321) assemblé de manière solidaire en rotation avec la structure de logement (303).

11. Dispositif (1) selon l'une quelconque des revendications précédentes, sur la structure de logement (303) étant fixé au moins un disque support de joint (615), qui à partir d'une paroi de base (604) s'étend dans la direction du système d'arbre (304) et sur lequel est placée au moins une unité d'étanchéité (387), laquelle assure l'étanchéité vers l'un des composants de freinage (311, 321).

12. Dispositif (1) selon l'une quelconque des revendications précédentes, comprenant un système de bobines (361) électriques, laquelle est logée entre au moins deux parois de support de bobine (606) magnétiquement conductrices, les composants de freinage (311, 321) rotatifs l'un par rapport à l'autre mettant à disposition chacun au moins une paroi de support de bobine (606).

13. Dispositif (1) selon l'une quelconque des revendications précédentes, comprenant au moins un système limitant la rotation (607), lequel est apte à et conçu pour bloquer et libérer mécaniquement la déplaçabilité de l'élément de transmission (2) au moyen d'au moins une unité de butée finale (617) activable et au moins un point d'appui (315, 325) des au moins deux points d'appui (315, 325) étant placé entre l'ensemble actionneur (340) et le système limitant la rotation (607).

14. Dispositif (1) selon l'une quelconque des revendications précédentes, comprenant au moins un système de capteur (320), destiné à détecter une grandeur caractéristique pour le déplacement de l'élément de transmission (2), le système de capteur (320) étant placé à l'extérieur d'un espace de carter (605) défini entre les parois porteuses (603).

15. Dispositif (1) selon l'une quelconque des revendications précédentes, une connexion (308) électrique du système d'entraînement (302) et / ou du système de freinage (301) s'effectuant par l'intermédiaire de la structure de logement (303) et la connexion (308) comportant au moins un orifice d'accès (308a) orienté dans la direction de l'élément de transmission (2) et / ou le système d'entraînement (302) comprenant au moins un moteur électrique (332) ou étant conçu en tant que tel et le moteur électrique (322) étant conçu sous la forme d'un moteur à flux axial (332a), notamment sous la forme d'un moteur à rotor-disque ou sous la forme d'un moteur à induit en cloche ou le moteur électrique (322) étant conçu sous la forme d'un moteur à flux radial (332c).
